# EUROPÄISCHE PATENTANMELDUNG

(11) **EP 3 627 412 A1**
(43) Veröffentlichungstag der Anmeldung: **25.03.2020**
(21) Anmeldenummer: 19190641.1
(22) Anmeldetag: 08.08.2019
(51) Int. Cl.: G06Q 10/08, G06Q 50/30, G06Q 10/00

(54) **MATERIALBESTANDS-VERWALTUNGSSYSTEM IN EINEM FAHRZEUG UND VERFAHREN ZU SEINEM BETRIEB**

(30) Priorität: 18.09.2018 DE 102018215874
(71) Anmelder: Volkswagen AG, 38440 Wolfsburg (DE)
(72) Erfinder: Bork, Simon, 38547 Calberlah (DE); Aktas, Özgür, 38226 Salzgitter (DE)

(57) **Zusammenfassung**

Die Erfindung betrifft ein Verfahren zum Betreiben eines Materialbestands-Verwaltungssystems in einem Fahrzeug (11) mit zumindest zwei Aufbewahrungsvorrichtungen (17.1 bis 17.6), bei dem Durchführungsdaten empfangen werden, wobei die Durchführungsdaten einen Materialbedarf umfassen, und eine Materialbestands-Liste bereitgestellt wird, durch die den Aufbewahrungsvorrichtungen (17.1 bis 17.6) jeweils zumindest eine Inhaltsinformation zugeordnet wird. Anhand der Materialbestands-Liste und der Materialliste werden relevante Aufbewahrungsvorrichtungen (17.1 bis 17.6) bestimmt und die relevanten Aufbewahrungsvorrichtungen (17.1 bis 17.6) werden hervorgehoben. Die Erfindung betrifft ferner ein Materialbestands-Verwaltungssystem in einem Fahrzeug (11) mit zumindest zwei Aufbewahrungsvorrichtungen (17.1 bis 17.6). Dabei umfasst das Materialbestands-Verwaltungssystem eine Empfangseinheit, die dazu eingerichtet ist, Durchführungsdaten zu empfangen, wobei die Durchführungsdaten einen Materialbedarf umfassen. Es umfasst ferner eine Speichereinheit, die dazu eingerichtet ist, eine Materialbestands-Liste bereitzustellen, durch die den Aufbewahrungsvorrichtungen (17.1 bis 17.6) jeweils zumindest eine Inhaltsinformation zugeordnet wird, und eine Recheneinheit, die dazu eingerichtet ist, anhand der Materialbestands-Liste und der Materialliste relevante Aufbewahrungsvorrichtungen (17.1 bis 17.6) zu bestimmen. Dabei ist das Materialbestands-Verwaltungssystem dazu eingerichtet, die relevanten Aufbewahrungsvorrichtungen (17.1 bis 17.6) hervorzuheben.

## Beschreibung

Die vorliegende Erfindung betrifft ein Verfahren zum Betreiben eines Materialbestands-Verwaltungssystems in einem Fahrzeug mit zumindest zwei Aufbewahrungsvorrichtungen. Sie betrifft ferner ein Materialbestands-Verwaltungssystem in einem Fahrzeug mit zumindest zwei Aufbewahrungsvorrichtungen.

Es sind Nutzfahrzeuge bekannt, wie sie beispielsweise Servicehandwerker nutzen, um zu dem Ort zu gelangen, an dem sie bestimmte Arbeiten ausführen sollen, und um benötigte Materialien mitzuführen. Dabei sind einzelne Fahrzeuge einer größeren Flotte von Fahrzeugen oft unterschiedlich bestückt, was die Organisation von Arbeitseinsätzen erschwert und zu unnötig langen Fahrten oder Umwegen führt.

In der DE 20 2013 100 697 U1 wird eine Vorrichtung zur Kontrolle der Beladung eines Service-Fahrzeugs beschrieben, bei dem Behälter, die bestimmte Werkzeuge oder Ersatzteile enthalten, in einer Liste gespeichert sind. Beim Beladen des Fahrzeugs werden die Behälter erfasst und ein Freigabesignal wird erzeugt, wenn die Behälter der Liste eingeladen sind.

Der vorliegenden Erfindung liegt die Aufgabe zugrunde, ein Materialbestands-Verwaltungssystem bereitzustellen, das eine besonders effiziente Erledigung von Aufträgen ermöglicht.

Erfindungsgemäß wird diese Aufgabe durch ein Verfahren mit den Merkmalen des Anspruchs 1 und ein Materialbestands-Verwaltungssystem mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren der eingangs genannten Art werden Durchführungsdaten empfangen, wobei die Durchführungsdaten einen Materialbedarf umfassen. Es wird eine Materialbestands-Liste bereitgestellt, durch die den Aufbewahrungsvorrichtungen jeweils zumindest eine Inhaltsinformation zugeordnet wird.

Anhand der Materialbestands-Liste und des Materialbedarfs werden relevante Aufbewahrungsvorrichtungen bestimmt und die relevanten Aufbewahrungsvorrichtungen werden hervorgehoben.

Dadurch kann ein Nutzer vorteilhafterweise besonders einfach die relevanten Aufbewahrungsvorrichtungen erkennen, insbesondere um zur Durchführung der Arbeiten für einen Auftrag etwa die benötigten Materialien, Ersatzteile oder Werkzeuge bei den Aufbewahrungsvorrichtungen zu lokalisieren.

Die Durchführungsdaten betreffen Informationen, die zur Vorbereitung und Durchführung von Arbeiten für einen Auftrag erforderlich sind. Sie können anhand von Auftragsdaten erzeugt werden, die von einer zentralen Einheit oder von dem Fahrzeug empfangen werden. Zum Beispiel umfassen die Durchführungsdaten eine Auftragsbezeichnung, einen Auftragsort, Kalenderdaten und/oder eine geplante Route. Anhand dieser Daten kann die Durchführung der notwendigen Arbeiten für einen Auftrag umfassend vorbereitet werden. Die Durchführungsdaten umfassen insbesondere Informationen darüber, an welchem Ort und zu welcher Zeit welche Arbeiten auszuführen sind und welche Materialien, Ersatzteile und Werkzeuge hierzu erforderlich sind.

Die Durchführungsdaten können dabei automatisch erzeugt werden, etwa durch eine Recheneinheit, wobei insbesondere ein Verfahren der künstlichen Intelligenz oder des Maschinenlernens genutzt wird. Zum Training eines solchen Systems können Daten aus der Vergangenheit verwendet werden, beispielsweise über Materialien, Ersatzteile und Werkzeuge , die zur Durchführung bestimmter Aufgaben benötigt wurden, eine Arbeitszeit, Eigenschaften der ausführenden Mitarbeiter sowie Eigenschaften eines Auftraggebers oder einer konkreten Anlage, an der die Arbeiten vorzunehmen sind.

Alternativ oder zusätzlich können zum Erzeugen der Durchführungsdaten Eingaben eines Nutzers erfasst werden, wobei die Durchführungsdaten beispielsweise anhand einer manuellen Eingabe eines zentralen Operators erzeugt werden können. Alternativ oder zusätzlich können von einem Nutzer Daten über Randbedingungen für eine automatische Bestimmung der Durchführungsdaten erfasst werden, beispielsweise eine Priorisierung bestimmter Fahrzeuge, Kunden, Mitarbeiter oder Arten von Aufträgen.

Alternativ oder zusätzlich kann auch festgestellt werden, ob ein Fehlercode, der von einer Anlage erfasst und übersandt wurde, mit den durchgeführten Arbeiten übereinstimmt. Ggf. können hier für die nächsten Aufträge Anpassungen in der Auftragsvorbereitung durchgeführt werden (Anpassung Werkzeugliste, Ersatzteilliste).

Bei einer Ausbildung des Verfahrens umfassen die Durchführungsdaten ferner Informationen zur Bereitstellung von benötigtem Material für das Fahrzeug. So kann die Durchführung eines Auftrags vorteilhafterweise so vorbereitet werden, dass auch gegebenenfalls fehlendes Material rechtzeitig bereitgestellt wird, etwa durch Nachlieferung an einen bestimmten Ort oder Abholung durch das Fahrzeug selbst.

Der Materialbedarf umfasst beispielsweise Informationen über einen Bedarf an Verbrauchsmaterial, Ersatzteilen, Werkzeug und/oder eine erforderliche Qualifikation eines ausführenden Mitarbeiters. Der Materialbedarf kann ferner Informationen über Eigenschaften des Fahrzeugs, insbesondere eine Eignung für bestimmte Arbeitseinsätze, umfassen. Dadurch kann vorteilhafterweise besonders einfach ermittelt werden, ob ein Fahrzeug zur Durchführung eines bestimmten Auftrags geeignet ist oder ob Änderungen vorgenommen werden müssen.

Der Materialbedarf wird insbesondere anhand der Auftragsbezeichnung ermittelt, anhand derer beispielsweise die Notwendigkeit bestimmter Reparatur- oder Wartungsarbeiten ermittelt werden kann, was bestimmte Ersatzteile und Werkzeuge erfordert.

Zum Bereitstellen der Materialbestands-Liste ist insbesondere eine Speichereinheit im Fahrzeug vorgesehen. Die Materialbestands-Liste umfasst etwa Informationen darüber, welche Materialien, Ersatzteile oder Werkzeuge einer bestimmten Aufbewahrungsvorrichtung zugeordnet sind. Die Inhaltsinformationen betreffen grundsätzlich Daten, die angeben, wieviel von was sich bei welcher Aufbewahrungsvorrichtung befindet. Sie können ferner angeben, ob sich bestimmte Teile bei einer Aufbewahrungsvorrichtungen befinden sollten, obwohl sie aktuell fehlen und gegebenenfalls ergänzt werden müssen.

Die betätigbaren Aufbewahrungsvorrichtungen können beispielsweise Schubladen, Fächer, Kisten und/oder Steckverbindungen, wie etwa Steckdosen, andere elektrische Kontakte oder eine Befestigungsvorrichtung umfassen, die insbesondere in einem Ladebereich des Fahrzeugs angeordnet sind.

Bei einer Ausbildung des erfindungsgemäßen Verfahrens umfasst eine Betätigung einer Aufbewahrungsvorrichtung ein Öffnen einer Schublade oder eines Fachs, das Herausnehmen einer Kiste und/oder das Anschließen oder Lösen einer Steckverbindung.

Eine "Betätigung" kann beispielsweise erfasst werden, wenn beispielsweise ein entsprechender Sensor das Öffnen einer Schublade oder eines Fachs, das Herausnehmen einer Kiste und/oder das Anschließen oder Lösen einer Steckverbindung als Betätigung einer Aufbewahrungsvorrichtung detektiert. Ferner kann das Einsetzen oder Herausnehmen einer Aufbewahrungsvorrichtung oder das Belegen eines Platzes in einer Aufbewahrungsvorrichtung als Betätigung erfasst werden.

Um den Betätigungszustand einer Aufbewahrungsvorrichtung zu erfassen, kann ein Sensor verwendet werden, beispielsweise ein Kontaktschalter, ein Sensor zum Messen eines Gewichts oder einer Gewichtsveränderung, ein optischer Sensor oder einen elektromagnetischen Sensor. Im Bereich der Aufbewahrungsvorrichtungen können im Fahrzeugsensoren angebracht sein, die den Betätigungszustand erfassen können. Sie können zum Beispiel erfassen, ob ein für die Aufbewahrungsvorrichtungen vorgesehener Platz belegt ist, etwa mittels eines Kontaktschalters, durch Messung eines Gewichts, durch einen optischen Sensor oder einen elektromagnetischen Sensor. Ferner können Betätigungen, wie etwa ein Öffnen einer Schublade oder ein Herausnehmen einer Box, erfasst werden. Ferner können separate Sensoren Betätigungen erfassen oder die Aufbewahrungsvorrichtungen können selbst Sensoren für die Betätigung umfassen.

Die erfassten Betätigungen werden insbesondere gespeichert, etwa durch "Mitloggen" der Betätigungen von Aufbewahrungsvorrichtungen.

Bei einer weiteren Ausführung wird ein Beginn einer Auftragsdurchführung erfasst und während der Auftragsdurchführung werden Betätigungen der Aufbewahrungsvorrichtungen erfasst. Dadurch wird vorteilhafterweise überwacht, welche Tätigkeiten während der Auftragsdurchführung an den Aufbewahrungsvorrichtungen ausgeführt werden.

Bei einer weiteren Ausbildung werden nach einem Abschluss der Auftragsdurchführung die betätigten Aufbewahrungsvorrichtungen hervorgehoben. Der Nutzer kann dadurch vorteilhafterweise erkennen, welche Aufbewahrungsvorrichtungen er bei den Arbeiten betätigt hat, insbesondere durch Öffnen, Herausnehmen oder Lösen.

Der Nutzer kann diese Informationen nutzen, um gegebenenfalls übrige Teile zu den Aufbewahrungsvorrichtungen zurückzuführen und dort einzulagern oder er kann besonders einfach eine Abrechnung zu dem Auftrag erstellen.

Bei einer Weiterbildung wird der Beginn der Auftragsdurchführung anhand einer Nutzereingabe, beispielsweise mittels eines Knopfes oder einer Schaltfläche, oder anhand einer Aktivität im Bereich eines Personen- oder Ladebereichs des Fahrzeugs erfasst. Die erfassten Aktivitäten können etwa einen Öffnungszustand einer Fahrzeugtür im Personen- oder Ladebereich umfassen, der auf eine Tätigkeit des Nutzers im entsprechenden Bereich hinweist. Der Beginn kann ferner anhand einer Betätigung einer Aufbewahrungsvorrichtungen erfasst werden. Alternativ oder zusätzlich können Positionen des Nutzers oder Bewegungen in den Bereichen des Fahrzeugs oder seiner Umgebung detektiert werden oder es können elektromagnetische Signale ausgewertet werden, beispielsweise eine Annäherung eines Geräts, dass elektromagnetische Strahlung aussendet. Der Beginn kann zudem bei der Ankunft des Fahrzeugs am Auftragsort erfasst werden

Analog dazu kann der Abschluss der Auftragsdurchführung erfasst werden, mithin anhand einer Nutzereingabe oder durch Detektieren einer Aktivität in bestimmten Bereichen des Fahrzeugs oder seiner Umgebung. Die Hervorhebung der relevanten Aufbewahrungsvorrichtungen erfolgt insbesondere nach dem Erfassen des Abschlusses einer Auftragsdurchführung.

Nach der Erfassung von Beginn und Abschluss der Auftragsdurchführung kann insbesondere bestimmt werden, welche Betätigungen der Aufbewahrungsvorrichtungen dazwischen, das heißt während der Auftragsdurchführung erfasst wurden. Die betätigten Aufbewahrungsvorrichtungen können als relevant markiert und hervorgehoben werden.

Bei einer Ausbildung werden Inhaltsänderungen der Aufbewahrungsvorrichtungen, insbesondere der betätigten Aufbewahrungsvorrichtungen, erfasst, beispielsweise automatisch anhand von Sensoren, die etwa Videodaten erfassen, einen Barcode erkennen, eine Nahfeldkommunikation (RFID) mittels elektromagnetischer Signale durchführen oder einen Gewicht oder eine Gewichtsänderung detektieren. Dabei werden insbesondere in den Aufbewahrungsvorrichtungen befindliche Teile erfasst.

Bei einer Ausbildung werden die relevanten Aufbewahrungsvorrichtungen mittels eines Lichtsignals hervorgehoben. Hierzu werden insbesondere Lichtzeichen oder Lichtquellen, wie beispielsweise LEDs, verwendet. Es können unterschiedliche Lichtemissionen erzeugt werden, etwa verschiedener Farbe und Helligkeit oder mit einem dynamischen Effekt, etwa blinkendes Licht. Auf diese Weise kann der Nutzer vorteilhafterweise die relevanten Aufbewahrungsvorrichtungen besonders einfach identifizieren.

Bei einer weiteren Ausbildung wird das Lichtsignal mittels Leuchtmitteln erzeugt, die in der Umgebung der jeweiligen Positionen der Aufbewahrungsvorrichtungen angeordnet sind. Ferner können die Leuchtmittel von den Aufbewahrungsvorrichtungen selbst umfasst oder im Fahrzeug an einer Position in unmittelbarer Nähe der Aufbewahrungsvorrichtungen angeordnet sein. Dadurch wird vorteilhafterweise eine besonders deutliche Hervorhebung erreicht.

Bei einer Weiterbildung wird für jede der Aufbewahrungsvorrichtungen jeweils ein Betätigungszustand erfasst und, wenn ein geöffneter Betätigungszustand erfasst wird, wird die jeweilige Aufbewahrungsvorrichtung hervorgehoben. Dadurch kann vorteilhafterweise sichergestellt werden, dass geöffnete Aufbewahrungsvorrichtungen wieder geschlossen werden.

Analog dazu kann eine Hervorhebung erfolgen, wenn der Betätigungszustand einer Aufbewahrungsvorrichtung anzeigt, dass diese leer, nicht ordnungsgemäß befestigt oder nicht angeschlossen ist. Die Hervorhebung erfolgt beispielsweise nach dem Abschluss einer Auftragsdurchführung, beim Starten des Fahrzeugs oder auf eine Nutzereingabe hin, etwa mittels einer Schaltfläche.

Der Betätigungszustand kann anhand unterschiedlicher Sensoren erfasst werden, beispielsweise Kontaktschalter, Videosensoren, Gewichtssensoren oder elektromagnetischer Sensoren. Es kann beispielsweise ein Stromfluss erfasst werden, wenn ein Gerät zum Aufladen eines Akkus an einen Stromanschluss gekoppelt werden kann. Zudem kann eine Hervorhebung dort erfolgen, wo eine Aufbewahrungsvorrichtungen nicht am für sie vorgesehenen Ort detektiert wird; beispielsweise wird ein Fach beleuchtet, in welches eine dafür vorgesehene Kiste nicht eingelagert wurde.

Bei einer Ausbildung wird ferner eine Aufbewahrungsvorrichtung hervorgehoben, die zur Aufnahme eines Werkzeugs vorgesehen ist, wenn das Werkzeug nicht in der Aufbewahrungsvorrichtung detektiert wird. Dadurch wird vorteilhafterweise an fehlende Werkzeuge erinnert.

Ferner kann eine Nutzereingabe zum Bestätigen oder Quittieren erfasst werden, wodurch ein Benutzer die Hervorhebung beenden kann.

Bei einer weiteren Ausbildung wird eine leere Aufbewahrungsvorrichtung erfasst und hervorgehoben. Die Hervorhebung kann sowohl automatisch als auch manuell ausgelöst werden. Dadurch kann der Nutzer vorteilhafterweise leicht erfassen, welche Aufbewahrungsvorrichtungen aktuell nicht belegt sind.

Das erfindungsgemäße Materialbestands-Verwaltungssystem der eingangs genannten Art umfasst eine Empfangseinheit, die dazu eingerichtet ist, Durchführungsdaten zu empfangen, wobei die Durchführungsdaten einen Materialbedarf umfassen. Es umfasst ferner eine Speichereinheit, die dazu eingerichtet ist, eine Materialbestands-Liste bereitzustellen, durch die den Aufbewahrungsvorrichtungen jeweils zumindest eine Inhaltsinformation zugeordnet wird. Es umfasst zudem eine Recheneinheit, die dazu eingerichtet ist, anhand der Materialbestands-Liste und der Materialliste relevante Aufbewahrungsvorrichtungen zu bestimmen, wobei das Materialbestands-Verwaltungssystem dazu eingerichtet ist, die relevanten Aufbewahrungsvorrichtungen hervorzuheben.

Die erfindungsgemäße Vorrichtung ist insbesondere ausgebildet, das vorstehend beschriebene erfindungsgemäße Verfahren zu implementieren. Die Vorrichtung weist somit dieselben Vorteile auf wie das erfindungsgemäße Verfahren.

Bei einer weiteren Ausbildung umfasst das Material Bestands-Verwaltungssystem eine Erfassungseinheit, durch die der Beginn einer Auftragsdurchführung erfasst wird. Dies kann beispielsweise anhand eines Öffnungszustand einer Tür erfasst werden, wobei die Hervorhebung etwa dann erfolgt, wenn die Tür zu einem Ladebereich des Fahrzeugs eröffnet wird. Alternativ oder zusätzlich kann eine Nutzereingabe erfassbar sein und die Hervorhebung auslösen. Weitere Verfahren können verwendet werden, insbesondere wie oben für das erfindungsgemäße Verfahren beschrieben.

Die Erfindung wird nun anhand von Ausführungsbeispielen mit Bezug zu den Zeichnungen erläutert.
- Figuren 1A und 1B: zeigen ein Ausführungsbeispiel eines Auftragsverwaltungssystems,
- Figur 2: zeigt ein Ausführungsbeispiel der Bearbeitung eines Auftrags,
- Figuren 3A und 3B: zeigen Ausführungsbeispiele für Anzeigen, die bei der Verwaltung von Aufträgen erzeugt werden können,
- Figuren 4A bis 4F: zeigen Beispiele für weitere Anzeigen, die bei der Verwaltung von Aufträgen erzeugt werden können,
- Figuren 5A bis 5F: zeigen Beispiele für Anzeigen, die bei der Ausführung von Arbeiten für Aufträge erzeugt werden können,
- Figuren 6A und 6B: zeigen Beispiele für weitere Anzeigen, die bei der Verwaltung von Aufträgen erzeugt werden können,
- Figuren 7A bis 7C: zeigen Beispiele für weitere Anzeigen, die bei der Verwaltung von Aufträgen erzeugt werden können,
- Figuren 8A bis 8D: zeigen Beispiele für weitere Anzeigen, die bei der Ausführung von Arbeiten für Aufträge erzeugt werden können,
- Figur 9: zeigt ein Ausführungsbeispiel eines Regalsystems mit Aufbewahrungsvorrichtungen und
- Figur 10: zeigt ein weiteres Ausführungsbeispiel der Komponenten eines Auftrags- und Materialverwaltungssystems in einem Fahrzeug.

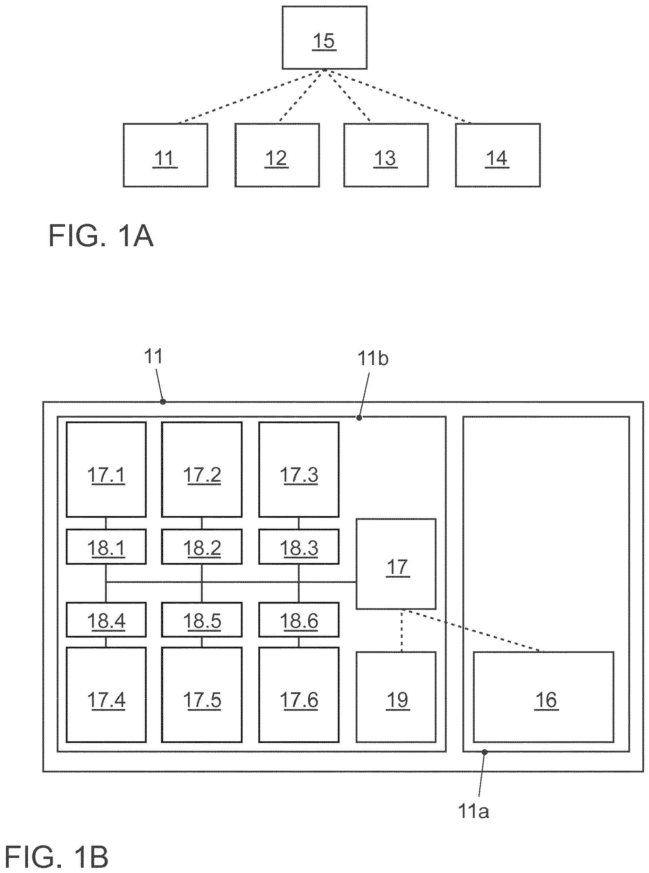

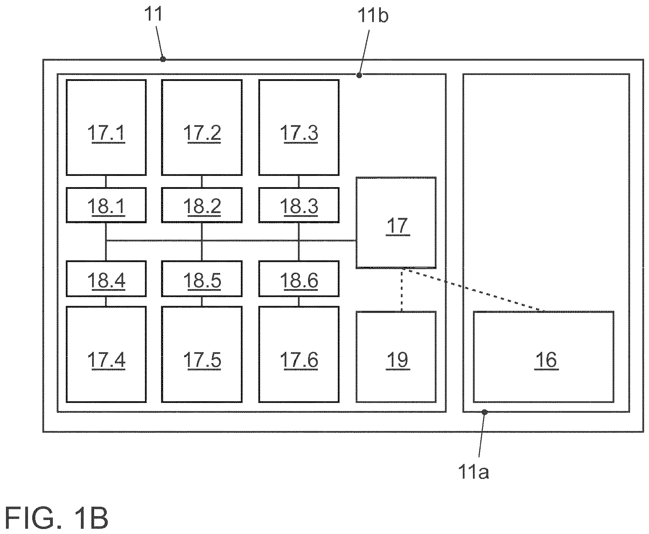

Mit Bezug zu den Figuren 1A und 1B wird ein Ausführungsbeispiel eines Auftragsverwaltungssystems erläutert.

Das Auftragsverwaltungssystem umfasst mehrere Fahrzeuge 11, 12, 13, 14, die datentechnisch mit einer zentralen Steuereinheit 15 gekoppelt sind. Die datentechnische Verbindung wird auf an sich bekannte Weise hergestellt, beispielsweise mittels einer Mobilfunkverbindung oder über ein anderes Netzwerk, insbesondere über das Internet. Hierzu umfassen bei dem Ausführungsbeispiel die Fahrzeuge 11, 12, 13, 14 sowie die zentrale Steuereinheit 15 jeweils geeignete Schnittstellen (nicht dargestellt). Bei weiteren Ausführungsbeispielen kann die datentechnische Verbindung über weitere Einrichtungen vermittelt werden, beispielsweise ein Mobiltelefon eines Fahrers, welches sowohl mit der zentralen Steuereinheit 15 als auch mit dem Fahrzeug 11, 12, 13, 14 datentechnisch verbunden ist.

Eines der Fahrzeuge 11, 12, 13, 14 ist beispielhaft in Figur 1B im Detail gezeigt.

Das Fahrzeug 11 weist einen Innenraum auf, der einen Personenbereich 11a und einen Ladebereich 11b umfasst. Der Personenbereich 11a wird hier vom Führerhaus des Fahrzeugs 11 gebildet und ist durch eine durchgehende Wand vom Ladebereich 11b getrennt. Bei weiteren Ausführungsbeispielen kann ein Durchgang zwischen Personenbereich 11a und Ladebereich 11b vorgesehen sein oder der Innenraum kann durchgehend ausgebildet sein, sodass der Personenbereich 11a und Ladebereich 11b lediglich durch eine gedachte Begrenzung voneinander zu trennen sind. Insbesondere wird der Personenbereich 11a als Umgebung eines Fahrersitzes des Fahrzeugs 11 definiert, gegebenenfalls auch weiterer Sitze des Fahrzeugs 11.

Im Personenbereich 11a ist ein erstes Nutzergerät 16 angeordnet, das bei dem Ausführungsbeispiel einen fest im Personenbereich 11a installierten Touchscreen umfasst. Im Ladebereich 11b ist ein zweites Nutzergerät 19 angeordnet, das bei dem Ausführungsbeispiel als Tablet-Computer ausgebildet ist. Ferner ist bei dem Ausführungsbeispiel eine fest im Ladebereich 11b installierte Halterung für den Tablet-Computer vorgesehen, die den Tablet-Computer während einer Fahrt des Fahrzeugs 11 sicher hält, um ein Heraus- oder Herunterfallen und Beschädigungen des Tablet-Computers zu vermeiden.

In weiteren Ausführungsbeispielen ist statt des ersten Nutzergeräts 16 eine Aufnahme oder Halterung für ein mobiles Nutzergerät vorgesehen, insbesondere für ein Mobiltelefon oder einen Tablet-Computer. Ferner kann das zweite Nutzergerät fest im Ladebereich 11b installiert oder fest mit diesem verbunden sein.

In einem weiteren Ausführungsbeispiel wird statt des ersten 16 und des zweiten Nutzergeräts 19 ein einzelnes Nutzergerät verwendet, das insbesondere mobil ausgebildet ist und sowohl im Personenbereich 11a als auch im Ladebereich 11b verwendet werden kann. Dabei können geeignete Aufnahmen oder Halterungen im Personenbereich 11a und im Ladebereich 11b angeordnet sein, insbesondere mit einer Anschlussvorrichtung, durch die eine Verbindung mit dem Nutzergerät hergestellt und/oder dessen Anwesenheit detektiert werden kann.

Im Ladebereich 11b sind ferner Aufbewahrungsvorrichtungen 17.1 bis 17.6 angeordnet, denen jeweils eine Beleuchtungseinheit 18.1 bis 18.6 zugeordnet ist. Die Aufbewahrungsvorrichtungen 17.1 bis 17.6 sind bei dem Ausführungsbeispiel als Schubladen 17.1 bis 17.6 und Fächer 17.1 bis 17.6 eines Regalsystems ausgebildet. Sie können alternativ oder zusätzlich Kästen, Kisten, Koffer, Halterungen oder auf andere an sich bekannte Weise ausgebildete Vorrichtungen umfassen. Entscheidend ist dabei, dass sich die Aufbewahrungsvorrichtungen 17.1 bis 17.6 zur Aufnahme und/oder Halterung von Gegenständen eignen, beispielsweise Werkzeuge, Ersatzteile, Verbrauchsmaterialien, Zubehörteile oder Schriftstücke. Analog dazu können Flüssigkeits- oder Gasbehälter vorgesehen sein.

Die Aufbewahrungsvorrichtungen 17.1 bis 17.6 sind insbesondere an bestimmten Positionen in dem Ladebereich 11b angeordnet. Bei dem Ausführungsbeispiel ist zu diesem Zweck ein Schrank- oder Regalsystem in dem Ladebereich 11b installiert, in das die Schubladen 17.1 bis 17.6 an definierten Positionen eingeschoben werden können. Es sind Kontaktschalter vorgesehen, die von ordnungsgemäß eingeschobenen Schubladen 17.1 bis 17.6 betätigt werden, während sie bei nicht vollständigem oder fehlerhaftem Einschub nicht betätigt werden.

Alternativ oder zusätzlich können Aufbewahrungsvorrichtungen 17.1 bis 17.6 Schließvorrichtungen und Sensoren für den Schließzustand umfassen. Beispielsweise können die Aufbewahrungsvorrichtungen 17.1 bis 17.6 als Fächer 17.1 bis 17 6 eines Regalsystems ausgebildet sein, in welche Kisten oder andere Gegenstände gelegt oder eingeschoben werden können. Ein solches Fach 17.1 bis 17.6 weist bei diesem Beispiel ein Sicherungselement auf, welches das Herausfallen des darin befindlichen Objekts verhindert. Ein Sensor erfasst, ob das Sicherungselement geschlossen oder geöffnet ist, beziehungsweise ob eine Aufbewahrungsvorrichtung 17.1 bis 17.6 an einer bestimmten Position des Regalsystems eingesetzt ist.

Die Aufbewahrungsvorrichtungen 17.1 bis 17.6 können ferner betätigt werden. Unter einer Betätigung einer Aufbewahrungsvorrichtung 17.1 bis 17.6 wird bei dem Ausführungsbeispiel verstanden, dass eine Schublade herausgezogen oder ein Fach geöffnet wird. Je nach Ausbildung der Aufbewahrungsvorrichtungen 17.1 bis 17.6 können Betätigungen auf andere Weisen ausgebildet sein, beispielsweise indem detektiert wird, dass ein Gegenstand aus einer Halterung genommen wird, eine Befestigung geöffnet wird oder ein elektrischer Kontakt unterbrochen wird. Insbesondere werden solche Handlungen als Betätigungen erfasst, durch die aufbewahrte Gegenstände entnommen oder gelöst werden können.

Bei weiteren Ausführungsbeispielen umfassen die Aufbewahrungsvorrichtungen 17.1 bis 17.6 ferner eine Kennung, beispielsweise einen RFID-Chip, einen Barcode, spezifisch gebildete elektrische Kontakte oder eine andere Kennzeichnung, die mittels eines optischen, mechanischen, elektrischen, elektromagnetischen oder anderen Sensors erfasst werden kann. Das Fahrzeug 11 umfasst in diesem Fall Sensoren, welche die Aufbewahrungsvorrichtungen 17.1 bis 17.6 erfassen, beispielsweise wenn diese in den Ladebereich 11b eingeladen werden oder wenn sie an einer bestimmten Position im Ladebereich 11b positioniert werden. Zum Beispiel können Schubladen 17.1 bis 17.6 mit unterschiedlichen Kennungen versehen sein und es kann automatisch erfasst werden, welche Schublade 17.1 bis 17.6 an welcher Position in das Regalsystem eingesetzt ist. Analog dazu können zum Beispiel Kisten oder Koffer identifiziert werden, die in einer bestimmten Position in einem Fach 17.1 bis 17.6 im Ladebereich 11b positioniert werden. Zudem können einzelne Gegenstände Kennungen aufweisen, die analog dazu gebildet sind und mittels derer erfasst werden kann, welcher Gegenstand sich in einer Aufbewahrungsvorrichtung 17.1 bis 17.6 befindet.

Bei dem Ausführungsbeispiel ist vorgesehen, dass zumindest eine der Aufbewahrungsvorrichtungen 17.1 bis 17.6 einen Ladeanschluss aufweist, an den ein elektrisches Gerät zum Aufladen eines Akkus angeschlossen werden kann. Es wird erfasst, ob ein Gerät angeschlossen ist, wobei insbesondere auch der Typ des angeschlossenen Geräts oder das individuelle Gerät, zum Beispiel anhand einer Kennung, erfasst wird.

Die den Aufbewahrungsvorrichtungen 17.1 bis 17.6 zugeordneten Beleuchtungseinheiten 18.1 bis 18.6 umfassen bei dem Ausführungsbeispiel Leuchtdioden (LEDs), die je nach Ansteuerung ausgeschaltet sind oder grün oder rot leuchten. Sie sind in direkter räumlicher Nähe der ihnen zugeordneten Aufbewahrungsvorrichtungen 17.1 bis 17.6 angeordnet, insbesondere direkt darüber. Bei weiteren Ausführungsbeispielen sind die Beleuchtungseinheiten 18.1 bis 18.6 in die ihnen zugeordneten Aufbewahrungsvorrichtungen 17.1 bis 17.6 integriert, beispielsweise in den von vorne sichtbaren Bereich einer Schublade 17.1 bis 17.6. Bei einem weiteren Ausführungsbeispiel umfassen die Beleuchtungseinheiten 18.1 bis 18.6 mehrere Lichtquellen, zum Beispiel LEDs, die in unterschiedlicher Anzahl leuchten können, etwa um einen Füllstand einer Aufbewahrungsvorrichtung 17.1 bis 17.6 anzuzeigen.

Die Aufbewahrungsvorrichtungen 17.1 bis 17.6 und Beleuchtungseinheiten 18.1 bis 18.6 sind jeweils paarweise miteinander und mit einem Funktionssteuergerät 17 gekoppelt. Das Funktionssteuergeräte 17 umfasst eine Vielzahl physikalischer Schnittstellen zu den Aufbewahrungsvorrichtungen 17.1 bis 17.6 und Beleuchtungseinheiten 18.1 bis 18.6, insbesondere auch zu dem Regalsystem, zu Einrichtungen des Fahrzeugs 11, insbesondere über einen CAN-Bus, sowie zum ersten 16 und zweiten Nutzergerät 19, wobei diese Verbindungen bei dem Ausführungsbeispiel drahtlos über WLAN oder ein anderes drahtloses Netzwerk hergestellt werden.

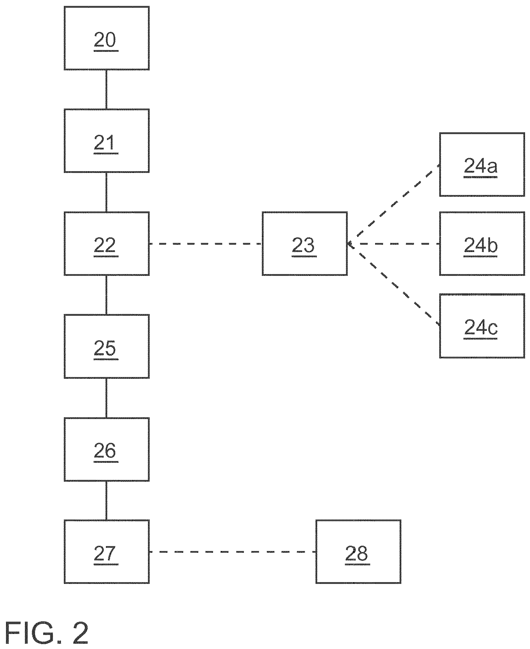

Mit Bezug zu Figur 2 wird ein Ausführungsbeispiel der Bearbeitung eines Auftrags erläutert. Dabei wird von dem oben erläuterten Ausführungsbeispiel eines Auftragsverwaltungssystems ausgegangen.

In einem ersten Schritt 20 werden Auftragsdaten erzeugt und gesendet. Bei dem Ausführungsbeispiel geschieht dies durch eine Heizungs- und Klimaanlage, die selbstständig einen Wartungsbedarf erkennt und einen entsprechenden Auftrag erzeugt. Die Auftragsdaten umfassen Informationen über eine Auftragsbezeichnung, das heißt die Art der durchzuführenden Arbeiten, und einen Auftragsort, das heißt eine geographische Position, an der die Arbeiten durchgeführt werden sollen, oder entsprechende Daten, die eine Identifikation der Heizungs- und Klimaanlage und ihrer Position erlauben. Das Senden der Auftragsdaten erfolgt bei dem Ausführungsbeispiel über das Internet.

Alternativ kann auch ein einfacher Fehlercode erzeugt und gesendet werden, um das übertragene Datenvolumen so gering wie möglich zu halten. Die Auswertung zum Erzeugen der Auftragsdaten erfolgt dann in der zentralen Steuereinheit 15.

In einem zweiten Schritt 21 werden die Auftragsdaten von der zentralen Steuereinheit 15 des Auftragsverwaltungssystems empfangen. Hierzu ist eine Schnittstelle vorgesehen, die Daten über das Internet empfängt und auswertet.

In einem weiteren Schritt 22 werden Fahrzeug-Statusdaten abgerufen. Bei dem Ausführungsbeispiel werden die dafür benötigten Daten von der zentralen Steuereinheit 15 bereitgestellt. In den Schritten 24a, 24b, 24c stellen die Fahrzeuge 11, 12, 13, 14 Informationen über ihre aktuelle Position, eine geplante Route und Termindaten über geplante Fahrten und bereits geplante Arbeiten sowie im Fahrzeug 11, 12, 13, 14 vorhandenes Material, Ersatzteile und Werkzeuge bereit. Ferner werden Informationen über den Fahrer oder einen weiteren Mitarbeiter bereitgestellt, der aktuell dem Fahrzeug 11, 12, 13, 14 zugeordnet ist, etwa eine Mitarbeiter-Identifikation und eine Qualifikation des Mitarbeiters. Zum Empfangen der Daten ist eine Schnittstelle 23 vorgesehen.

Bei einem weiteren Ausführungsbeispiel können die Fahrzeug-Statusdaten abgerufen werden, indem mittels der Schnittstelle 23 direkte Anfragen an die Fahrzeuge 11, 12, 13, 14 der Fahrzeugflotte übertragen werden. Diese senden dann die benötigten Informationen.

Die Schnittstelle 23 zu der Fahrzeugflotte ist bei dem Ausführungsbeispiel von der zentralen Steuereinheit 15 umfasst. Bei weiteren Ausführungsbeispielen kann statt der Schnittstelle 23 ein externer Server vorgesehen sein, der Informationen über die Fahrzeug-Statusdaten der Fahrzeuge 11, 12, 13, 14 verwaltet, aktualisiert und bei Bedarf zur Verfügung stellt. Die Fahrzeug-Statusdaten können dabei zum Beispiel in regelmäßigen Intervallen angefordert oder bei Statusänderungen durch die Fahrzeuge 11, 12, 13, 14 selbstständig bereitgestellt werden. Über entsprechende Schnittstellen kann dann auf die von dem externen Server gespeicherten Fahrzeug-Statusdaten zugegriffen werden.

In einem weiteren Schritt 25 wird ermittelt, welches Fahrzeug 11, 12, 13, 14 der Fahrzeugflotte am besten dazu geeignet ist, die Arbeiten für den Auftrag durchzuführen. Dabei wird berücksichtigt, wann und wo bereits welche Aufträge für die Fahrzeuge 11, 12, 13, 14 geplant sind. Ferner wird berücksichtigt, welche Materialien, Ersatzteile und Werkzeuge an Bord der Fahrzeuge 11, 12, 13, 14 vorhanden sind sowie welche Mitarbeiter mit den Fahrzeugen 11, 12, 13, 14 unterwegs sind und welche Qualifikationen diese aufweisen. Zum Beispiel dürfen bestimmte Wartungsarbeiten lediglich durch Mitarbeiter durchgeführt werden, die eine bestimmte Qualifikation haben. Des Weiteren wird berücksichtigt, ob gegebenenfalls fehlende Materialien, Ersatzteile oder Werkzeuge für den Auftrag beschafft werden müssen, beispielsweise durch Abholung an einer bestimmten Stelle und/oder Bestellung und Lieferung zu einem bestimmten Ort, und welche Auswirkungen dies auf den Ablauf der Durchführung hat.

Zudem wird berücksichtigt, ob Informationen über eine bestimmte Dringlichkeit des Auftrags vorliegen; gegebenenfalls kann ein besonders dringlicher Auftrag höher als andere Aufträge priorisiert werden, sodass dieser möglichst schnell ausgeführt werden kann, selbst wenn dadurch der Ablauf zeitlich oder wirtschaftlich nicht optimal gestaltet werden kann. Bei einem weiteren Ausführungsbeispiel werden den eingehenden Aufträgen Prioritäten zugeordnet und die Planung erfolgt anhand der Prioritäten.

Um das am besten geeignete Fahrzeug 11, 12, 13, 14 zu bestimmen, werden die zur Verfügung stehenden und zu berücksichtigenden Informationen mathematisch so verarbeitet, dass ein Optimierungsproblem gelöst werden kann. Zur Optimierung werden Optimierungskriterien definiert, beispielsweise soll die Durchführung von Aufträgen möglichst schnell, kostengünstig, qualitativ hochwertig und wirtschaftlich erfolgen, wobei diese Vorgaben gewichtet werden können. Zusätzlich können Nutzereingaben erfasst werden, etwa um einen Auftrag gezielt einem bestimmten Fahrzeug 11, 12, 13, 14 zuzuweisen.

In einem weiteren Ausführungsbeispiel werden bei der Optimierung insbesondere Informationen über frühere Aufträge und Daten aus der Vergangenheit berücksichtigt, beispielsweise die Dauer der zur Durchführung eines Auftrags benötigten Zeit in Abhängigkeit von der Art des Auftrags, dem Auftragsort, der betreffenden Anlage oder bestimmten Mitarbeitern. Auf diese Weise können, insbesondere durch Verfahren der künstlichen Intelligenz oder des Maschinenlernens, möglichst viele Informationen zur Optimierung genutzt werden.

Außerdem kann festgestellt werden, ob der von einer Anlage übersandte Fehlercode mit den durchgeführten Arbeiten übereinstimmt. Ggf. können hier für die nächsten Aufträge Anpassungen in der Auftragsvorbereitung durchgeführt werden (Anpassung Werkzeugliste, Ersatzteilliste).

In einem weiteren Schritt 26 werden Durchführungsdaten erzeugt. Diese werden in einem Schritt 27 an das bei der Optimierung bestimmte Fahrzeug 11, 12, 13, 14 übertragen und in einem weiteren Schritt 28 empfangen. Die Durchführungsdaten umfassen Informationen, die benötigt werden, um den Auftrag durchzuführen. Sie umfassen insbesondere die Auftragsbezeichnung und den Auftragsort sowie Informationen über die geplante Zeit für die Durchführung, Hinweise auf Besonderheiten des Auftrags, Informationen über benötigte Materialien, Ersatzteile und Werkzeuge sowie gegebenenfalls Möglichkeiten zur Beschaffung fehlender Teile. Durchführungsdaten können manuell durch Eingaben eines Nutzers ergänzt werden.

Bei einem weiteren Ausführungsbeispiel werden ferner Bestätigungsdaten erzeugt und an die Herkunftsstelle des Auftrags gesendet. Darin wird bestätigt, dass der Auftrag empfangen wurde und dass die entsprechenden Arbeiten durchgeführt werden. Zusätzlich sind bei dem Ausführungsbeispiel Informationen darüber umfasst, welcher Mitarbeiter die Arbeiten wann durchführen wird, ob gegebenenfalls Vorarbeiten oder Vorbereitungen nötig sind und/oder ob vorher Materialien an den Auftragsort geliefert werden oder dort bereitzustellen sind.

Bei einem weiteren Ausführungsbeispiel werden Materialien, Ersatzteile oder Werkzeuge, die nicht im Fahrzeug vorhanden sind, bestellt und an das Fahrzeug 11, 12, 13, 14 werden Informationen darüber gesendet, wo diese abgeholt werden können.

Bei einem weiteren Ausführungsbeispiel kann ein Fahrzeug 11, 12, 13, 14, mit dem die Arbeiten eines Auftrags durchgeführt werden sollen, Planungs-Änderungsdaten erzeugen, wenn sich bei der Durchführung der geplanten Arbeiten für verschiedene Aufträge Änderungen ergeben, beispielsweise wegen einer zeitlichen Verzögerung, nicht vorhandener Materialien, Ersatzteile und Werkzeuge, Ausfällen von Mitarbeitern oder anderer Ereignisse. Wenn dadurch die geplanten Arbeiten für einen Auftrag nicht oder nicht in der geplanten Weise durchgeführt werden können, kann dies der zentralen Steuereinheit 15 mitgeteilt werden. Diese überprüft, ob und in welcher Weise die Planung der Arbeiten verändert werden muss, wobei insbesondere eine erneute Optimierung durchgeführt wird, um ein Fahrzeug 11, 12, 13, 14 zur Durchführung der Arbeiten für den Auftrag zu bestimmen. Die entsprechenden Schritte des Verfahrens gemäß der Erfindung werden hierzu wiederholt.

Bei einem weiteren Ausführungsbeispiel wird das Verfahren lediglich für ein einzelnes Fahrzeug 11 durchgeführt. In diesem Fall entfällt die Ermittlung des am besten geeigneten Fahrzeugs und die Durchführungsdaten werden so erzeugt, dass im Fahrzeug 11 Informationen über benötigte Materialien vorliegen, insbesondere Informationen über aktuell nicht im Fahrzeug 11 vorhandene Teile und die Möglichkeiten ihrer Beschaffung. Ferner werden die Durchführungsdaten so erzeugt, dass eine optimale Bearbeitung mehrere Aufträge gewährleistet ist. Zum Beispiel erfolgt eine zeitliche Planung so, dass die Durchführung der Aufträge nach bestimmten Optimierungskriterien erfolgt, zum Beispiel unter Minimierung von Zeit, Kosten oder Anfahrtswegen oder unter Priorisierung bestimmter Aufträge oder Typen von Aufträgen.

Nachfolgend werden Beispiele für Anzeigen erläutert, die in dem oben erläuterten Auftragsverwaltungssystem in den Fahrzeugen 11, 12, 13, 14 erzeugt werden können. Bei diesem Ausführungsbeispiel sind die Nutzergeräte 16, 19 des Fahrzeugs 11, 12, 13, 14 von einer Bedienvorrichtung umfasst und weisen einen Verwaltung- und einen Dokumentationsmodus auf. Dabei ist der Verwaltungsmodus dem Personenbereich 11a und der Dokumentationsmodus dem Ladebereich 11b zugeordnet.

Im Allgemeinen dient der Verwaltungsmodus dazu, im Fahrzeug 11, 12, 13, 14 die vorliegenden Durchführungsdaten für die Aufträge zu verwalten und zu bearbeiten. Der Verwaltungsmodus ist dem Personenbereich 11a des Fahrzeugs 11, 12, 13, 14 zugeordnet, ebenso wie das erste Nutzergerät 16, das dem Personenbereich 11a angeordnet ist. Das Nutzergerät 16 gibt daher eine Bedienoberfläche aus, mittels derer die Aufgaben des Verwaltungsmodus bearbeitet werden können, insbesondere mittels Eingaben eines Nutzers und Informationsanzeigen.

Dagegen dient der Dokumentationsmodus dazu, die Durchführung von Arbeiten für einen Auftrag zu dokumentieren und einen Nutzer bei der Durchführung der Arbeiten zu unterstützen. Der Dokumentationsmodus ist daher dem Ladebereich 11b des Fahrzeugs 11, 12, 13, 14 zugeordnet. Das zweite Nutzergerät 19 ist vorgesehen, im Ladebereich 11b oder in seiner Umgebung angeordnet zu sein oder verwendet zu werden. Es gibt daher eine Bedienoberfläche aus, welche die Erfüllung der Aufgaben des Dokumentationsmodus ermöglicht. Beispielsweise werden Informationen im Zusammenhang mit der Durchführung eines Auftrags ausgegeben und Nutzereingaben in diesem Zusammenhang werden erfasst.

Da typischerweise der Personenbereich 11a besser klimatisiert ist als der Ladebereich 11b, kann durch diese Trennung erreicht werden, dass der Nutzer möglichst viele relevante Aufgaben im Personenbereich 11a durchführen kann, während gleichzeitig der Ladebereich 11b nicht zu lange geöffnet sein muss.

Bei weiteren Ausführungsbeispielen sind der Verwaltungs- und Dokumentationsmodus anderen räumlichen Bereichen zugeordnet. Entscheidend ist hierbei die Trennung verschiedener Bereiche, in denen unterschiedliche Aufgaben im Zusammenhang mit Aufträgen und Arbeiten zur Durchführung von Aufträgen ausgeführt werden.

Bei weiteren Ausführungsbeispielen ist ein Nutzergerät 16, 19 vorgesehen, für das sowohl der Verwaltungs- als auch der Dokumentationsmodus aktiviert werden kann. Zum Beispiel kann das erste 16 oder zweite Nutzergerät 19 beweglich angeordnet sein, sodass es sowohl in den Personenbereich 11a als auch in den Bereich des Ladebereichs 11b gebracht werden kann. Alternativ kann lediglich ein einzelnes Nutzergerät 16, 19 vorgesehen sein, welches beispielsweise einem bestimmten Mitarbeiter zugeordnet ist und die Aufgaben des ersten 16 und zweiten Nutzergeräts 19 erfüllt. Die Position des Nutzergeräts 16, 19 kann erfasst werden und in Abhängigkeit von dieser Position wird entweder der Verwaltungs- oder Dokumentationsmodus aktiviert.

Der Verwaltungs- und der Dokumentationsmodus können automatisch für dasjenige Nutzergerät 16, 19 aktiviert werden, dass sich in den entsprechend zugeordneten Bereichen 11a, 11b befindet, wobei der Aufenthaltsort auf unterschiedliche Weisen detektiert werden kann, beispielsweise anhand einer Signalstärke einer kabellosen datentechnischen Verbindung. Alternativ oder zusätzlich kann eine manuelle Aktivierung des Verwaltungs- oder Dokumentationsmodus vorgenommen werden, beispielsweise mittels eines Schalters oder einer Schaltfläche, die von dem Nutzergerät 16, 19 bereitgestellt wird.

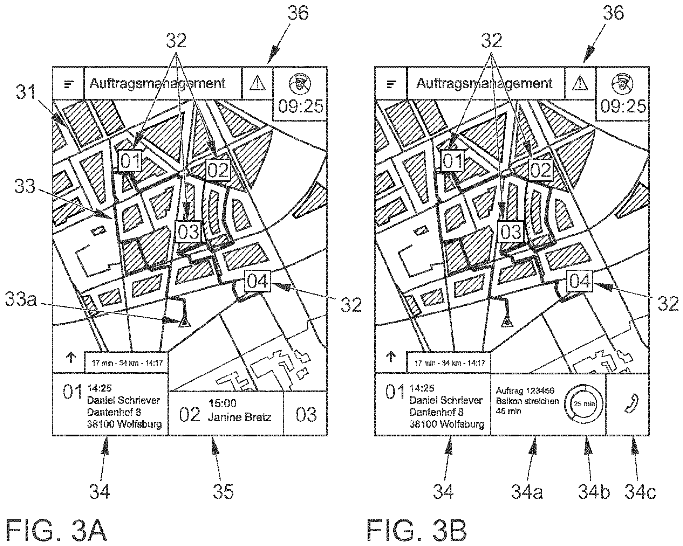

Mit Bezug zu den Figuren 3A und 3B werden Beispiele für Anzeigen erläutert, die bei der Verwaltung von Aufträgen erzeugt werden können.

Die Anzeigen werden insbesondere auf dem ersten Nutzergerät 16 eines Fahrzeugs 11 des oben mit Bezug zu den Figuren 1A und 1B erläuterten Auftragsverwaltungssystems ausgegeben. Es wird davon ausgegangen, dass für dieses erste Nutzergerät 16 der Verwaltungsmodus aktiviert ist.

Die Anzeige umfasst einen Kartenausschnitt 31, in dem ein Verkehrswegenetz dargestellt ist. An den jeweiligen geografischen Positionen sind Auftragsorte 32 eingezeichnet, die Zwischenziele 32 einer geplanten Route 33 des Fahrzeugs 11 darstellen. Die aktuelle Position des Fahrzeugs 11 ist in dem Kartenausschnitt 31 als Pfeilspitze 33a markiert. Die Auftragsorte 32 sind mit Ziffern versehen, die verdeutlichen, in welcher Reihenfolge der erste, zweite, dritte und vierte Auftrag auszuführen ist.

Am unteren Rand der Anzeige wird in einem Informationsfeld 34 der aktuell durchgeführte Auftrag dargestellt, gekennzeichnet durch die Ziffer "01". Die Darstellung umfasst eine Adresse, das heißt den Auftragsort, und eine Uhrzeit, zu der die Arbeiten für den Auftrag ausgeführt werden sollen. Ferner sind die voraussichtliche Ankunftszeit am Auftragsort, die voraussichtliche Dauer der Fahrt dorthin und die aktuelle Entfernung dargestellt. Neben diesem Informationsfeld ist am unteren Rand ein weiteres Informationsfeld 35 mit Informationen über den folgenden Auftrag dargestellt, wobei hier neben der Ziffer "02" lediglich die Zeit zu Ausführung und der Name des Auftraggebers angegeben ist. Ferner wird am unteren Rand ein weiteres Informationsfeld dargestellt, das sich auf den übernächsten Auftrag bezieht und das lediglich die Ziffer "03" umfasst.

Die Anzeige umfasst ferner ein Warnsymbol 36, das am oberen Rand dargestellt wird. In dem Ausführungsbeispiel wird so eine Warnung ausgegeben, dass eine oder mehrere Schubladen eines Regalsystems im Ladebereich 11b des Fahrzeugs 11 nicht ordnungsgemäß geschlossen sind. Alternativ oder zusätzlich kann eine Warnung ausgegeben werden, wenn benötigte Materialien, Ersatzteile oder Werkzeuge nicht an Bord des Fahrzeugs 11 sind oder bei anderen Fehlern.

Bei dem Ausführungsbeispiel umfasst das erste Nutzergerät 16 einen Touchscreen. Der Nutzer kann diesen im Bereich des Informationsfeldes 34 für den aktuellen Auftrag betätigen und damit nähere Informationen zu den aktuell durchzuführenden Arbeiten aufzurufen. Alternativ kann der Nutzer den Touchscreen im Bereich des ersten Auftragsortes 32 im Kartenausschnitt 31 berühren. Andere Weisen der Bedienung, Auswahl und Betätigung können alternativ oder zusätzlich vorgesehen sein, insbesondere mittels eines Touchpads, Wählknopfes, Joysticks oder einer Maus. Auf die Betätigung hin erscheint die in Figur 3B gezeigte Anzeige mit einer Auftragsbezeichnung 34a mit einer genaueren Benennung der vorzunehmenden Arbeiten oder der vorliegenden Fehlermeldung, einer geschätzten Dauer 34b der Arbeiten und einer Schaltfläche 34c, mittels derer ein Anruf beim Auftraggeber gestartet werden kann.

Analog hierzu kann der Nutzer den Touchscreen im Bereich des Informationsfeldes 35 für den nächsten Auftrag oder des zweiten Auftragsortes 32 im Kartenausschnitt 31 berühren, um Detailinformationen über den folgenden Auftrag aufzurufen.

Bei weiteren Ausführungsbeispielen wird, wenn Detailinformationen zu einem Auftrag angezeigt werden, der zugeordnete Auftragsort 32 im Kartenausschnitt 31 auf besondere Weise markiert, etwa farblich, durch ein besonderes Symbol oder durch einen dynamischen Effekt, etwa ein Blinken.

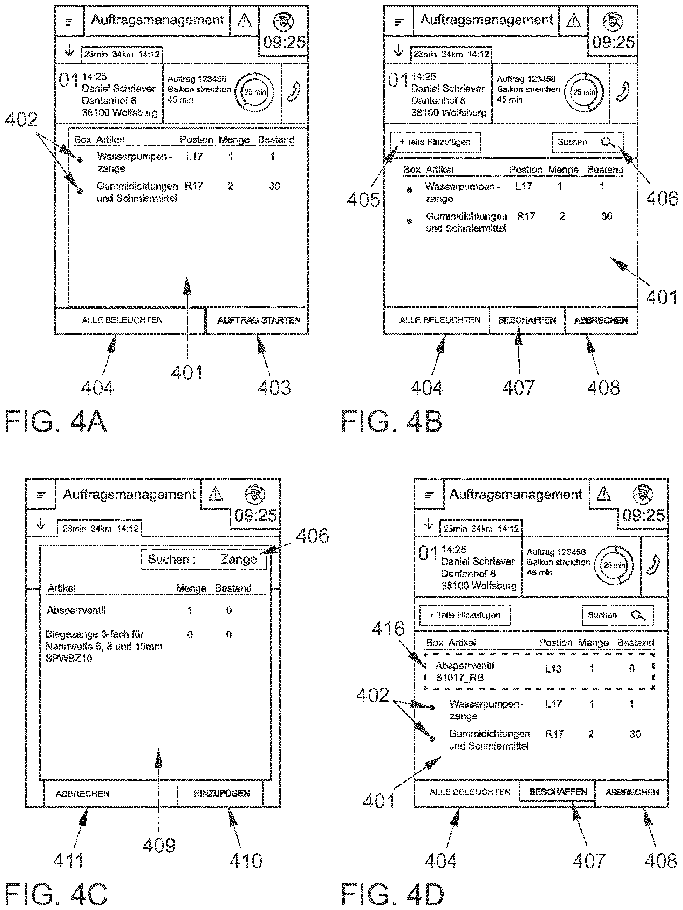

Mit Bezug zu den Figuren 4A bis 4F werden Beispiele für Anzeigen erläutert, die bei der Verwaltung von Aufträgen erzeugt werden können. Bei dem dargestellten Fall hat ein Nutzer - bei aktiviertem Verwaltungsmodus - bei einer der oben mit Bezug zu den Figuren 3A und 3B erläuterten Anzeigen eine Schaltfläche so betätigt, dass eine detaillierte Verwaltung des konkreten Auftrags "01" ausgeführt wird. Die folgenden Anzeigen werden ebenfalls auf dem ersten Nutzergerät 16 des Fahrzeugs 11 des oben mit Bezug zu den Figuren 1A und 1B erläuterten Auftragsverwaltungssystems ausgegeben.

Die Anzeige in Figur 4A umfasst, analog zu den im unteren Bereich der Figur 3B dargestellten Informationsfeldern, Detailinformationen zum aktuell bearbeiteten Auftrag. Diese Felder sind in Figur 4A jedoch im oberen Teil der Anzeige angeordnet, wohin sie beispielsweise nach der Betätigung im Bereich des Informationsfelds 34 für den aktuell durchgeführten Auftrag verschoben werden. Im unteren Teil der Anzeige befindet sich eine Materialliste 401, in der Werkzeuge, Materialien und Ersatzteile aufgelistet werden, die zur Durchführung des aktuellen Auftrags notwendig sind. Die Materialliste 401 umfasst Informationen zur Bezeichnung des Artikels, seiner im Ladebereich 11b vorgesehenen Position, der benötigten Menge und dem aktuellen Bestand an Bord des Fahrzeugs 11. In der Liste sind ferner Prüfleuchten 402 dargestellt, die unterschiedliche Zustände annehmen können: Ist ein Artikel nicht an Bord des Fahrzeugs vorhanden, so wird keine Prüfleuchte 402 angezeigt; befindet sich der Artikel in einer Aufbewahrungsvorrichtung 17.1 bis 17.6, so nimmt die Farbe der Prüfleuchte 402 eine bestimmte Farbe an.

Bei weiteren Ausführungsbeispielen können andere Bedingungen für das Erscheinungsbild der Prüfleuchte 402 vorgesehen sein. Das Erscheinungsbild der Prüfleuchte 402 kann auf unterschiedliche an sich bekannte Weisen gebildet sein, beispielsweise mit unterschiedlicher Farbe, Helligkeit oder mit einem dynamischen Effekt wie Blinken. Das Erscheinungsbild der Prüfleuchte 402 kann ferner vom Zustand einer der Aufbewahrungsvorrichtung 17.1 bis 17.6 zugeordneten Beleuchtungseinheit 18.1 bis 18.6 abhängen und beispielsweise verhindert werden, wenn die Beleuchtungseinheit 18.1 bis 18.6 aufleuchtet, ihre Farbe verändert oder ausgeschaltet wird.

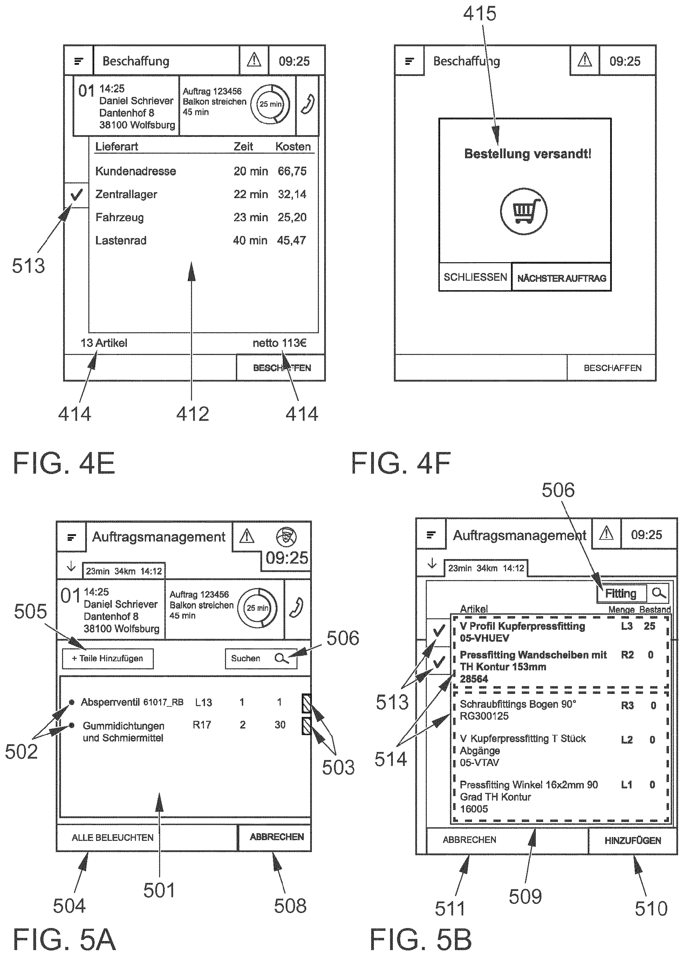

Die Anzeige in Figur 4A umfasst ferner eine Schaltfläche 403 zum Starten des aktuellen Auftrags, wodurch bei dem vorliegenden Ausführungsbeispiel der Dokumentationsmodus manuell aktiviert und eine neue Bedienoberfläche angezeigt wird, etwa die unten mit Bezug zu den Figuren 5A bis 5F erläuterten Anzeigen. Alternativ oder zusätzlich kann eine Routenführung zum Auftragsort des Auftrags gestartet werden. Zudem ist eine weitere Schaltfläche 404 umfasst, mittels derer die den Artikeln der Materialliste 401 zugeordneten Aufbewahrungsvorrichtungen 17.1 bis 17.6 mittels der Beleuchtungseinheiten 18.1 bis 18.6 beleuchtet und hervorgehoben werden können; auch dies wird unten näher erläutert.

Anhand der in Figur 4B gezeigten Anzeige können weitere Artikel zu der Materialliste 401 hinzugefügt werden. Die Anzeige ist zum größten Teil analog zu der Anzeige der Figur 4A gebildet. Es werden daher lediglich abweichende Merkmale erläutert.

Oberhalb der Materialliste 401 ist eine Schaltfläche 405 angeordnet, mittels derer ein Dialog zum Hinzufügen von Artikeln gestartet werden kann. Benachbart dazu befindet sich ein Suchfeld 406, das betätigt werden kann, um einen Suchbegriff einzugeben. Zur Eingabe wird bei der Erfindung eine Tastatur verwendet; alternativ oder zusätzlich kann jedoch auch eine Spracherkennung, eine Erfassung mittels eines Barcodescanners oder ein anderes Verfahren verwendet werden.

Die Anzeige umfasst ferner eine Schaltfläche 407 "Beschaffen" zum Aufrufen eines Dialogs betreffend die Beschaffung fehlender Materialien sowie eine Schaltfläche 408 "Abrechnen" zum Erstellen einer Abrechnung. Diese Funktionalitäten werden ebenfalls weiter unten näher erläutert.

Bei dem in Figur 4C gezeigten Fall hat der Nutzer das Suchfeld 406 betätigt und einen Suchbegriff, vorliegend das Wort "Zange", eingegeben. Es erscheint eine Ergebnisliste 409, in der die anhand des Suchbegriffs bestimmten relevanten Artikel mit einer Bezeichnung, der benötigten Menge sowie dem aktuellen Bestand im Fahrzeug 11 aufgeführt sind. Der Nutzer kann nun die gewünschten Artikel in der Ergebnisliste 409 markieren und gegebenenfalls die gewünschte Menge eingeben. Die Anzeige umfasst ferner eine Schaltfläche 410 zum Hinzufügen ausgewählter Teile zur Materialliste 401 sowie eine Schaltfläche 411 zum Abbrechen der Suche und Rückkehr zur Anzeige der Figur 4B.

Die in Figur 4D gezeigte Anzeige entspricht im Wesentlichen der in Figur 4B gezeigten und oben bereits erläuterten Anzeige, allerdings wurde in der Materialliste 401 ein Artikel aus der Ergebnisliste 409 der Anzeige in Figur 4C ergänzt. Dieser Artikel ist derzeit nicht an Bord des Fahrzeugs 11, daher wird für ihn keine Prüfleuchte 402 angezeigt. Stattdessen wird bei dem Ausführungsbeispiel der neu hinzugefügte Artikel mittels einer Markierung 416 markiert, hier dargestellt mittels eines gestrichelten Rahmens. Die Hervorhebung kann auf andere an sich bekannte Weise erfolgen, beispielsweise durch Farbe, Helligkeit, fettes oder kursives Schriftbild oder einen dynamischen Effekt wie Blinken.

Bei dem in Figur 4E gezeigten Fall hat der Nutzer bei der in Figur 4D gezeigten Anzeige die Schaltfläche 407 "Beschaffen" betätigt und es wird ein Dialog gestartet, bei dem der Nutzer angeben kann, wie die fehlenden Artikel beschafft werden sollen. Hierzu wird eine Liste 412 von Beschaffungsmöglichkeiten angezeigt, wobei für verschiedene Lieferarten die dafür veranschlagte Zeit und die dabei entstehenden Kosten aufgeführt werden. Durch einen Haken 413 wird die derzeit ausgewählte Beschaffungsmöglichkeit markiert.

Bei dem Ausführungsbeispiel ist vorgesehen, dass die Liste 412 der Beschaffungsmöglichkeiten so erzeugt wird, dass gemäß eines vorgegebenen Optimierungskriteriums eine Rangfolge der Beschaffungsmöglichkeiten bestimmt wird. Die gemäß der Rangfolge besten Beschaffungsmöglichkeiten werden in der Liste oben, die weniger guten weiter unten ausgegeben. In dem vorliegenden Fall, ist als Optimierungskriterium vorgegeben, dass die benötigte Zeit minimiert werden soll. Weitere Optimierungskriterien können eine Minimierung der Kosten oder des Anfahrtsweg, Wirtschaftlichkeitskriterien oder eine besondere Priorisierung bestimmter Beschaffungsmöglichkeiten sein.

Die Anzeige umfasst ferner eine Darstellung der Summe 414, die sich anhand der Anzahl der bestellten Artikel und ihres Preises ergibt. Ferner ist die Schaltfläche 407 "Beschaffen" umfasst, bei deren Betätigung eine Bestellung mittels der aktuell markierten Beschaffungsmöglichkeit abgeschickt wird.

In Figur 4F wird eine Bestellungsbestätigung 415 angezeigt, durch die dem Nutzer signalisiert wird, dass die fehlenden Artikel erfolgreich nachbestellt wurden.

Bei dem Ausführungsbeispiel ist vorgesehen, dass anschließend an die Bestellungsbestätigung 415 wieder die Anzeige der Figur 3A oder 3B ausgegeben wird.

Mit Bezug zu den Figuren 5A bis 5F werden Beispiele für Anzeigen erläutert, die bei der Ausführung von Arbeiten für Aufträge erzeugt werden können. Die Anzeigen werden auf dem zweiten Nutzergerät 19 des Fahrzeugs 11 des oben mit Bezug zu den Figuren 1A und 1B erläuterten Auftragsverwaltungssystems ausgegeben. Dieses zweite Nutzergerät 19 ist dem Ladebereich 11b zugeordnet und der Dokumentationsmodus ist aktiviert.

Die Anzeige in Figur 5A umfasst, analog zur Anzeige der Figur 4A, Detailinformationen zum aktuell bearbeiteten Auftrag im oberen Teil der Anzeige. Darunter wird eine Materialliste 501 angezeigt, welche die zur Durchführung der Arbeiten für den aktuellen Auftrag notwendigen Werkzeuge, Materialien und Ersatzteile umfasst. Die Materialliste 501 umfasst Informationen zur Bezeichnung des Artikels, seiner im Ladebereich 11b vorgesehenen Position, der benötigten Menge und dem aktuellen Bestand an Bord des Fahrzeugs 11. Ferner sind Prüfleuchten 502 dargestellt, deren Zustände wie oben mit Bezug zu Figur 4A beschrieben gebildet sind.

Für die dargestellten Artikel werden ferner Sicherheitsleuchten 503 angezeigt, die Auskunft darüber geben, in welchem Zustand sich die dem Artikel zugeordnete Aufbewahrungsvorrichtung 17.1 bis 17.6 befindet: Bei dem Ausführungsbeispiel wird die Sicherheitsleuchte 503 nur dann angezeigt, wenn die Aufbewahrungsvorrichtung 17.1 bis 17.6 geöffnet, gelöst, entnommen oder in einem anderweitig betätigten Zustand ist. Ein solcher betätigter Zustand kann auch dadurch ausgelöst werden, dass sich ein Gegenstand, beispielsweise ein Werkzeug, nicht dem dafür vorgesehenen Platz befindet.

Solange eine der Aufbewahrungsvorrichtungen 17.1 bis 17.6 sich in einem solchen Zustand befindet, wird die entsprechende Sicherheitsleuchte 503 angezeigt. Ferner wird im oberen Bereich der Anzeige ein Warnsymbol 536 angezeigt. Es handelt sich dabei um eine Sicherheitsmaßnahme, durch die verhindert werden soll, dass das Fahrzeug 11 bewegt wird, obwohl die Ladung noch nicht sicher verstaut ist oder beispielsweise Werkzeuge nicht wieder korrekt im Fahrzeug 11 eingeladen und eventuell vergessen wurden.

Bei dem Ausführungsbeispiel ist vorgesehen, dass der Betätigungszustand der Aufbewahrungsvorrichtungen 17.1 bis 17.6 anhand verschiedener Sensoren je nach Art der Befestigung oder Aufbewahrung erfasst wird. So werden geschlossene Schubladen anhand eines Kontaktschalters detektiert, die Position elektrischer Werkzeuge wird durch ihren Anschluss an einen Ort im Netz zum Aufladen des Akkus bestimmt und die Lage bestimmter Materialien kann anhand optischer Sensoren oder elektromagnetischer Sensoren etwa mittels Nahfeldkommunikation (RFID) oder mittels Hall-Sensoren bestimmt werden.

Die Anzeige umfasst ferner eine Schaltfläche 505 zum Starten eines Dialogs zum Hinzufügen fehlender Teile sowie ein Suchfeld 506, das analog zur oben mit Bezug zu Figuren 4B und 4C erläuterten Suche bedient werden kann.

Bei dem in Figur 5B gezeigten Fall hat der Nutzer das Suchfeld 506 betätigt und einen Suchbegriff, vorliegend das Wort "Fitting", eingegeben. Es erscheint eine Ergebnisliste 509, in der die anhand des Suchbegriffs bestimmten relevanten Artikel mit einer Bezeichnung, ihrer im Fahrzeug 11 vorgesehenen Position sowie dem aktuellen Bestand im Fahrzeug 11 aufgeführt sind. Durch Markierungen 514 ist in der Darstellung hervorgehoben, dass für die oberen beiden Artikel in der Ergebnisliste 509 die Beleuchtungseinheiten 18.1 bis 18.6 für entsprechende Aufbewahrungsvorrichtungen 17.1 bis 17.6 beleuchtet werden. Der Nutzer kann hierdurch erkennen, in welchen Aufbewahrungsvorrichtungen 17.1 bis 17.6 er diese Artikel finden kann.

Ferner wird durch ein Betätigen eines Eintrags der Ergebnisliste 509 ein Blinken der entsprechenden Beleuchtungseinheiten 18.1 bis 18.6 für entsprechende Aufbewahrungsvorrichtungen 17.1 bis 17.6 aktiviert.

Die in Figur 5B dargestellten Markierungen 514 in Form gestrichelter Rahmen dienen lediglich der Verdeutlichung und werden bei dem Ausführungsbeispiel nicht tatsächlich ausgegeben. Stattdessen werden die entsprechenden Artikel durch ein verändertes Schriftbild, beispielsweise durch unterschiedliche Farbe, hervorgehoben. Andere grafische Hervorhebungen können ebenfalls verwendet werden.

Der Nutzer kann nun die gewünschten Artikel in der Ergebnisliste 509 auswählen, was durch die links neben den Artikelbezeichnungen angeordneten Haken 513 markiert wird. Die Anzeige umfasst ferner eine Schaltfläche 510 zum Hinzufügen ausgewählter Teile zur Materialliste 501 sowie eine Schaltfläche 511 zum Abbrechen der Suche und Rückkehr zur Anzeige der Figur 5A.

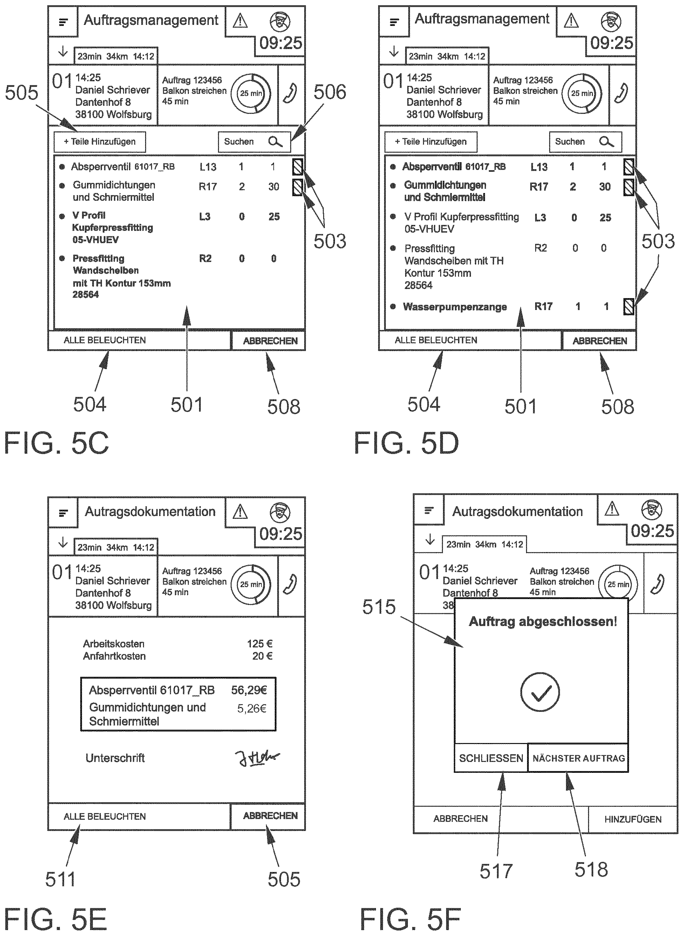

Bei dem in Figur 5C gezeigten Fall wurden die in Figur 5B ausgewählten Artikel zur Materialliste 501 hinzugefügt. Die Anzeige entspricht im Wesentlichen derjenigen der Figur 5A, allerdings mit der entsprechend ergänzten Materialliste 501.

Bei dem in Figur 5D gezeigten Fall hat der Benutzer eine weitere Aufbewahrungsvorrichtung 17.1 bis 17.6 betätigt. Im konkreten Fall hat er ein Werkzeug entnommen, nämlich eine Wasserpumpenzange. Der Name dieses Artikels erscheint daher in der Materialliste 501 mit einer Sicherheitsleuchte 503, die signalisiert, dass hier eine Betätigung vorgenommen wurde.

Bei dem in Figur 5E gezeigten Fall hat der Nutzer durch Betätigen der Schaltfläche 508 "Abrechnen" die Erzeugung und Ausgabe von Rechnungsdaten veranlasst. Es wird eine Abrechnung 516 angezeigt, die eine Auflistung von Arbeitskosten, Anfahrtskosten, verbrauchten Materialien und Ersatzteilen sowie die entsprechenden Preise umfasst. Sie umfasst ferner eine Unterschrift eines Kunden, die auf an sich bekannte Weise erfasst wird, beispielsweise durch Scannen oder Unterschreiben auf einer berührungsempfindlichen Oberfläche.

Bei dem Ausführungsbeispiel werden die Daten, die zum Bestimmen der Arbeitskosten und Anfahrtskosten erforderlich sind, das heißt insbesondere die Dauer, die zum Durchführen der Arbeiten für den Auftrag erforderlich sind und die Fahrzeit beziehungsweise Fahrtstrecke bei der Anfahrt, automatisch von dem System erfasst, beispielsweise mittels einer Schnittstelle des Funktionssteuergeräts zu Sensoren des Fahrzeugs für die gefahrene Strecke und durch Messen der Zeit zwischen der Ankunft am Auftragsort oder dem Beginn der Arbeiten und dem Erstellen der Abrechnung. Alternativ oder zusätzlich können Eingaben eines Nutzers erfasst werden, in denen er beispielsweise den Anfahrtsweg und/oder die Arbeitszeit spezifiziert.

Bei dem Ausführungsbeispiel wird ferner zum Erstellen der Rechnungsdaten geprüft, welche Aufbewahrungsvorrichtungen 17.1 bis 17.6 betätigt wurden, und es wird eine Abfrage erzeugt, bei welcher der Nutzer eingibt, welche Materialien, Ersatzteile und Werkzeuge er tatsächlich entnommen hat. Alternativ oder zusätzlich kann eine automatische Erfassung der entnommenen Teile erfolgen, beispielsweise mittels Videosensoren oder andere Sensoren. Das heißt, Gegenstände in Aufbewahrungsvorrichtungen 17.1 bis 17.6, die nicht betätigt wurden, werden nicht berücksichtigt, während dem Nutzer gezielt die potentiell entnommenen Gegenstände angezeigt werden. Dies erleichtert und beschleunigt das Erstellen der Abrechnung.

Die Anzeige umfasst ferner eine Schaltfläche 511 zum Abbrechen des Vorgangs und eine weitere Schaltfläche 505 zum Abschließen des Vorgangs, wobei die Abrechnung ausgedruckt werden kann. Ggf. kann auch automatisch eine Rechnung via E-Mail versandt werden, wenn die Daten des Kunden bekannt sind. Anschließend erscheint nach dem Abschließen des Vorgangs die in Figur 5F gezeigte Darstellung mit der Abschlussbestätigung 515 sowie eine Schaltfläche 517 zum Schließen der Abschlussbestätigung 515 und eine Schaltfläche 518 zum Fortsetzen beim nächsten Auftrag.

Bei dem Ausführungsbeispiel ist ferner vorgesehen, dass anhand der Inhaltsänderung für einzelne Aufbewahrungsvorrichtungen 17.1 bis 17.6, die beim Erstellen der Abrechnung erfasst wird, auch der im Fahrzeug gespeicherte Materialbestand aktualisiert wird. Die aktualisierten Daten werden ferner der externen Einheit 15 zur Verfügung gestellt, die in der Folge beim Einsatz des Fahrzeugs 11 berücksichtigt, dass bestimmte Materialien nicht mehr an Bord des Fahrzeugs 11 verfügbar sind.

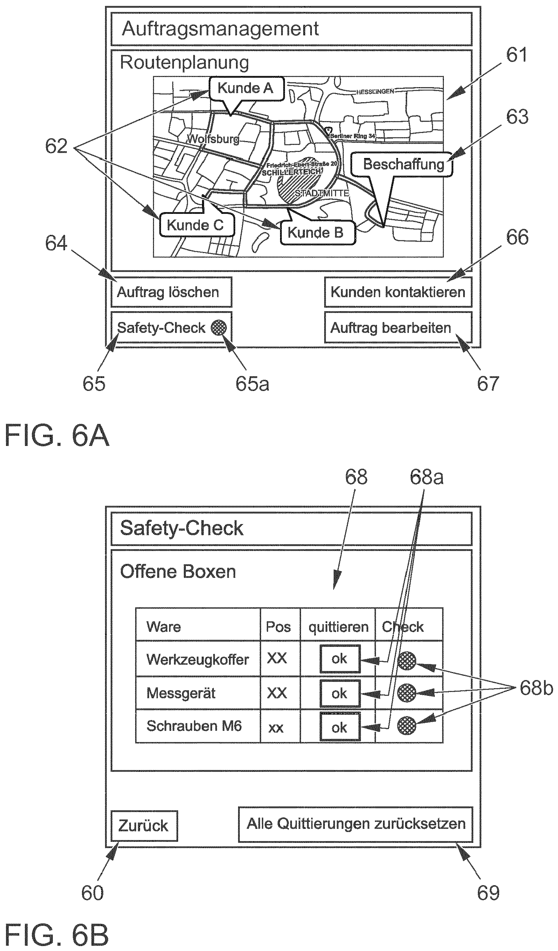

Mit Bezug zu den Figuren 6A und 6B werden Beispiele für weitere Anzeigen erläutert, die bei der Verwaltung von Aufträgen erzeugt werden können. Es wird davon ausgegangen, dass die Anzeigen durch das erste Nutzergerät 16 im Verwaltungsmodus angezeigt werden.

Figur 6A zeigt eine Anzeige mit einem Kartenausschnitt 61, in dem eine geplante Route und verschiedene entlang der Route angeordnete Auftragsorte 62 eingezeichnet sind. Ferner ist entlang der Route ein Beschaffungsort 63 eingezeichnet, der bei dem Ausführungsbeispiel einem Materiallager entspricht, bei dem das Fahrzeug 11 fehlende Materialien abholen kann. Bei dem Ausführungsbeispiel ist vorgesehen, dass der Nutzer die markierten Kunden 62 oder den Beschaffungsort 63 auswählen kann, insbesondere durch eine Berührung auf einem Touchscreen, der die Anzeige ausgibt, oder mittels einer andern Eingabevorrichtung. Wird ein Auftragsort 62 ausgewählt, so ist der dazugehörige Auftrag als aktueller Auftrag markiert.

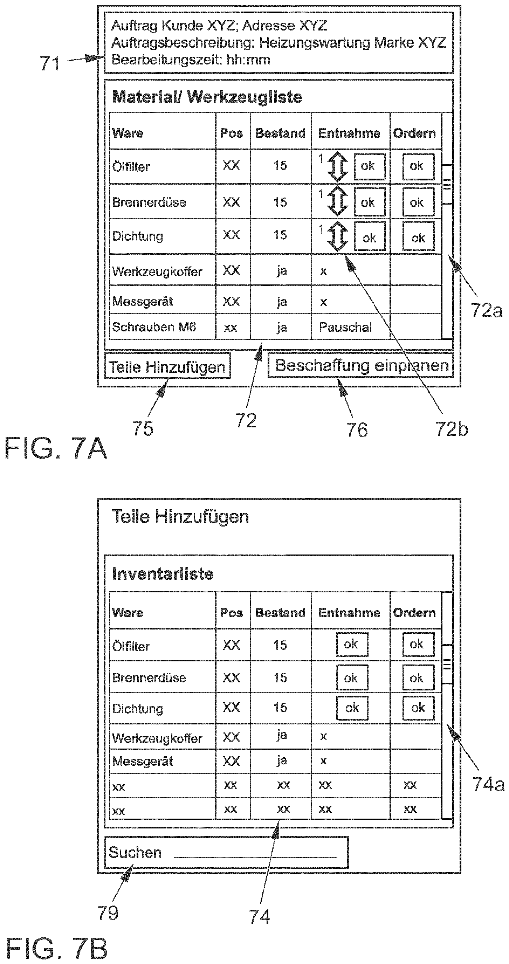

Die Anzeige umfasst ferner eine Schaltfläche 64 zum Löschen eines Auftrags und eine Schaltfläche 66 zum Kontaktieren eines Kunden. Bei dem Ausführungsbeispiel kann der Nutzer diese Schaltflächen 64, 66 betätigen, um den aktuell markierten Auftrag zu bearbeiten. Mittels einer weiteren Schaltfläche 67 können zusätzliche Optionen zum Arbeiten eines Auftrags aufgerufen werden, insbesondere die unten mit Bezug zu den Figuren 7A bis 7C beschriebenen Anzeigen und Eingabemöglichkeiten.

Zusätzlich ist in der Anzeige eine Schaltfläche 65 für einen sogenannten "Safety-Check" vorgesehen. Die Schaltfläche 65 umfasst eine Leuchtfläche 65a, die bei dem Ausführungsbeispiel als runder Bereich ausgebildet ist, der farblich hervorgehoben werden kann. Bei dem Ausführungsbeispiel wird die Leuchtfläche 65a dann hervorgehoben, beispielsweise durch eine besondere Farbe, Helligkeit oder einen dynamischen Effekt wie Blinken, wenn im Ladebereich 11b eine Aufbewahrungsvorrichtung 17.1 bis 17.6 in einem betätigten Zustand ist. Durch einen solchen betätigten Zustand wird erfasst, dass die Aufbewahrungsvorrichtung 17.1 bis 17.6 beispielsweise nicht ordnungsgemäß geschlossen, nicht am vorgesehenen Platz angebracht oder auf andere Weise nicht in einem gewünschten Grundzustand ist.

Durch Betätigen der Schaltfläche 65 ruft der Nutzer die in Figur 6B gezeigte Detaildarstellung auf, die eine Tabelle 68 umfasst. In dieser werden die Bezeichnungen von Waren und ihre Positionen, welche den Positionen der zugeordneten Aufbewahrungsvorrichtungen 17.1 bis 17.6 entsprechend, ausgegeben. Ferner wird für jede Ware eine Schaltfläche 68a zum "Quittieren" sowie eine Leuchtfläche 68b angezeigt. Anhand der Leuchtfläche 68b wird angezeigt, dass die der Ware zugeordnete Aufbewahrungsvorrichtung 17.1 bis 17.6 in einem betätigten Zustand ist, das heißt, sie ist nicht ordnungsgemäß geschlossen, sie detektiert ein Fehlen des Gegenstands oder sie weist eine andere kritische Besonderheit auf. Durch Betätigen der Schaltfläche 68a kann der Nutzer bestätigen, dass der betätigte Zustand der Aufnahmevorrichtung 17.1 bis 17.6 für diesen Gegenstand ignoriert werden soll, beispielsweise weil ein fehlendes Werkzeug an der Baustelle zurückgelassen und später abgeholt werden soll. Beim Quittieren einer solchen Meldung durch Bestätigen der Schaltfläche 68a wird die Aufbewahrungsvorrichtung 17.1 bis 17.6 nicht mehr als betätigt hervorgehoben.

Durch Betätigen der Schaltfläche 69 können alle Quittierungen zurückgesetzt werden, das heißt, es wird erneut geprüft, welche Aufbewahrungsvorrichtungen 17.1 bis 17.6 in einem betätigten Zustand sind und diese werden beim "Safety-Check" angezeigt.

Bei dem Ausführungsbeispiel ist ferner vorgesehen, dass beim Durchführen des "Safety-Check" die Beleuchtungseinheiten 18.1 bis 18.6, die den betätigten Aufbewahrungsvorrichtungen 17.1 bis 17.6 zugeordnet sind, hervorgehoben werden. Auf diese Weise kann der Nutzer beim Blick in den Ladebereich 11b leicht erkennen, um welche Aufbewahrungsvorrichtungen 17.1 bis 17.6 es sich handelt.

Durch Betätigen der Schaltfläche 60 gelangt der Nutzer zurück zu der in Figur 6A gezeigten Anzeige.

Mit Bezug zu den Figuren 7A bis 7C werden Beispiele für weitere Anzeigen erläutert, die bei der Verwaltung von Aufträgen erzeugt werden können. Es wird davon ausgegangen, dass die Anzeigen durch das zweite Nutzergerät 19 im Verwaltungsmodus angezeigt werden.

In der in Figur 7A dargestellten Anzeige werden dem Nutzer in einem Informationsfeld 71 Daten über den durchzuführenden Auftrag ausgegeben, insbesondere Name und Adresse eines Kunden sowie eine Beschreibung des Auftrags. Ferner wird die Bearbeitungszeit gemessen, wobei die Zeit bei dem Ausführungsbeispiel automatisch beginnt, wenn das Fahrzeug 11 den Kunden erreicht. Alternativ kann die Zeitmessung manuell gestartet und beendet werden.

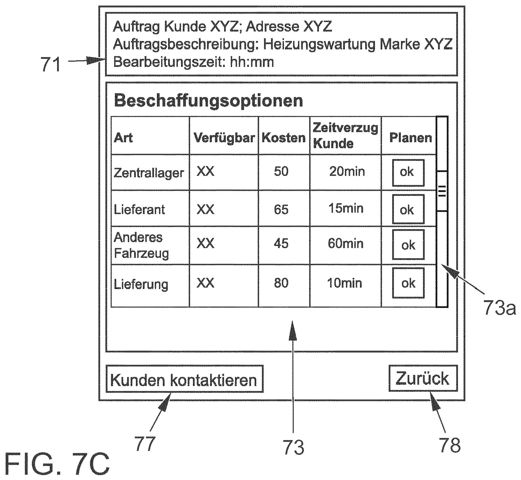

Es wird ferner eine Materialliste 72 ausgegeben, in der die für den Auftrag zu verwendenden Materialien, Ersatzteile und Werkzeuge aufgeführt sind. Für jeden Gegenstand wird die im Ladebereich 11b vorgesehene Position, insbesondere eine Kennung einer zugeordneten Aufbewahrungsvorrichtung 17.1 bis 17.6, und eine Information über den aktuellen Bestand ausgegeben. Ferner ist aufgeführt, wie viele der jeweiligen Gegenstände entnommen werden sollen, und eine Schaltfläche 72b kann verwendet werden, die angegebene Zahl zu erhöhen oder zu erniedrigen. Ferner sind den Gegenständen Schaltflächen zugeordnet, mit denen eine Eingabe bestätigt werden kann und mit denen eine Bestellung des Gegenstands veranlasst werden kann. Ein Scrollbalken 72a ist vorgesehen, um den dargestellten Ausschnitt aus einer längeren Liste zu verschieben. Die Anzeige umfasst ferner eine Schaltfläche 75, bei deren Betätigung die in Figur 7B gezeigte Bedienoberfläche zur Hinzufügung von weiteren Teilen erzeugt wird, sowie eine Schaltfläche 76, bei deren Betätigung die in Figur 7C gezeigte Bedienoberfläche zur Auswahl einer Beschaffungsoption erzeugt wird.

Bei dem in Figur 7B dargestellten Fall hat der Nutzer die Schaltfläche 75 zum Hinzufügen von weiteren Teilen der in Figur 7A dargestellten Bedienoberfläche betätigt. Es wird eine Inventarliste 74 angezeigt, die für die Gegenstände im Inventar des Fahrzeugs 11 eine Bezeichnung, eine vorgesehene Position, einen aktuellen Bestand und Schaltflächen zum Hinzufügen sowie zum Bestellen umfasst. Die Anzeige umfasst ferner ein Suchfeld 79, welches der Nutzer auf an sich bekannte Weise nutzen kann, um gezielt nach bestimmten Gegenständen zu suchen. Ein Scrollbalken 74a kann genutzt werden, um den dargestellten Ausschnitt einer längeren Liste zu verschieben.

Nach dem Hinzufügen von weiteren Teilen gelangt der Nutzer zurück zu der in Figur 7A gezeigten Bedienoberfläche, um die Materialliste 72 weiter zu bearbeiten.

Bei dem in Figur 7C dargestellten Fall hat der Nutzer die Schaltfläche 76 zum Planen einer Beschaffung betätigt. Es wird eine Liste 73 von Beschaffungsmöglichkeiten angezeigt, die für verschiedene Arten der Beschaffung anzeigt, ob die benötigten Materialien auf diese Weise verfügbar sind, wie hoch die Kosten sind und zu welchem Zeitverzug dies beim Kunden führt.

Mittels Schaltflächen können die einzelnen Beschaffungsoptionen ausgewählt werden, bei einer längeren Liste kann ein Scrollbalken 73a verwendet werden, um die Liste zu durchsuchen. Die verfügbaren Beschaffungsmöglichkeiten können beispielsweise eine Abholung aus einem Zentrallager, eine Lieferung durch einen Lieferanten oder ein anderes Fahrzeug oder eine anderweitige Lieferung, zum Beispiel an die Adresse des Kunden umfassen.

Bei der Auswahl einer Beschaffungsoption kann eine weitere Bedienoberfläche angezeigt werden, um zusätzliche Details zu der Beschaffung einzugeben.

Bei dem Ausführungsbeispiel ist vorgesehen, dass die angezeigte Liste 73 der Beschaffungsmöglichkeiten anhand einer Rangliste gebildet wird, in der anhand vorgegebener Optimierungskriterien bessere und schlechtere Beschaffungsmöglichkeiten identifiziert werden. Die Optimierungskriterien können beispielsweise eine Minimierung des Zeitverzugs, des Fahrtweges oder der Kosten umfassen, wobei auch andere Optimierungskriterien oder Kombinationen davon verwendet werden können; daneben können bestimmte Beschaffungsmöglichkeiten zusätzlich priorisiert werden, beispielsweise wenn die Beschaffung durch Verträge mit Lieferanten geregelt ist.

Die Anzeige umfasst ferner eine Schaltfläche 77, bei deren Betätigung Kontaktdaten des aktuellen Kunden angezeigt werden oder ein Kontakt hergestellt wird, beispielsweise per Telefon. Die Anzeige umfasst ferner eine Schaltfläche 78, bei deren Betätigung der Benutzer zurück zu der in Figur 7A dargestellten Bedienoberfläche gelangt.

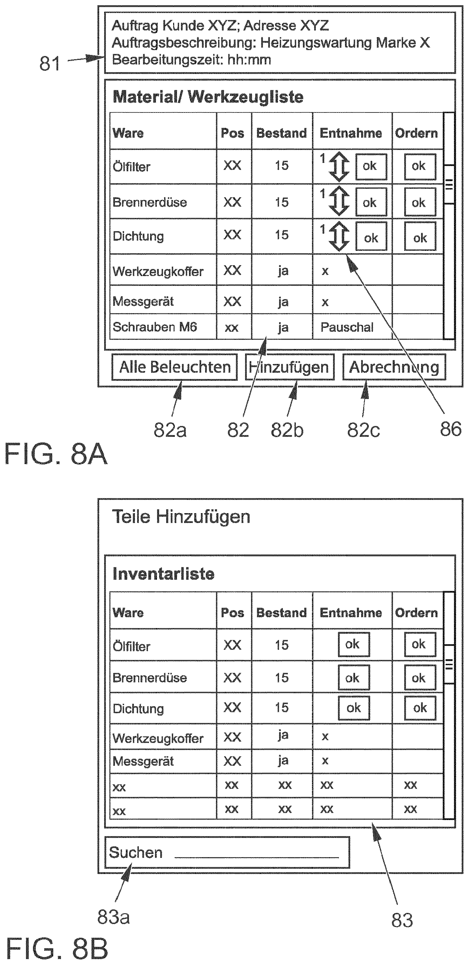

Mit Bezug zu den Figuren 8A bis 8D werden Beispiele für weitere Anzeigen erläutert, die bei der Ausführung von Arbeiten für Aufträge erzeugt werden können. Es wird davon ausgegangen, dass die Anzeigen durch das erste Nutzergerät 16 im Dokumentationsmodus angezeigt werden.

Bei dem Ausführungsbeispiel wird ferner davon ausgegangen, dass der Nutzer die Arbeiten zur Durchführung eines Auftrags abgeschlossen hat und anschließend die Arbeiten sowie verwendete Materialien, Ersatzteile und Werkzeuge dokumentiert. Dieser Schritt kann beispielsweise durch Betätigen einer entsprechenden Schaltfläche oder durch eine automatische Erkennung aufgerufen werden.

Die in Figur 8A gezeigte Anzeige umfasst ein Informationsfeld 81 mit Daten über den aktuellen Auftrag, wobei das Informationsfeld 81 analog zu dem Informationsfeld 71 der Anzeige in Figur 7A gebildet ist. Sie umfasst ferner eine Materialliste 82, die ebenfalls analog zu der Materialliste 72 der Anzeige in Figur 7A gebildet ist.

Bei dem Ausführungsbeispiel umfasst die Materialliste 82 diejenigen Materialien, Ersatzteile und Werkzeuge, die während der Ausführung der Arbeiten anhand der Betätigungen der Aufbewahrungsvorrichtungen 17.1 bis 17.6 erfasst wurden. Beispielsweise wird das Öffnen einer Box durch Aufziehen in einem Regalsystem automatisch registriert, beispielsweise mittels eines Kontaktschalters, und zu der Materialliste 82 werden die Teile hinzugefügt, die in der Box enthalten sind. Der Nutzer kann die Anzahl der tatsächlich entnommenen Teile mittels der zugeordneten Schaltflächen 86 einstellen und mittels einer Schaltfläche bestätigen sowie eine Nachbestellung mittels einer weiteren Schaltfläche veranlassen. Wurde ein Teil nicht entnommen, obwohl die zugeordnete Aufbewahrungsvorrichtung 17.1 bis 17.6 betätigt wurde, so kann der Nutzer die Zahl der entnommenen Teile beispielsweise auf "0" setzen und bestätigen.

Fehlende Teile können ergänzt werden, indem der Nutzer die Schaltfläche 82b betätigt, woraufhin insbesondere die in Figur 8B gezeigte und unten näher erläuterte Anzeige erzeugt wird.

Die Anzeige umfasst ferner eine Schaltfläche 82a, bei deren Betätigung die Aufbewahrungsvorrichtungen 17.1 bis 17.6 bestimmt werden, die in der Materialliste 401 genannt sind, und die jeweils zugeordneten Beleuchtungseinheiten 18.1 bis 18.6 aktiviert werden. Auf diese Weise werden die Aufbewahrungsvorrichtungen 17.1 bis 17.6 hervorgehoben, sodass der Nutzer einfach erkennen kann, wo bestimmte Teile entnommen wurden.

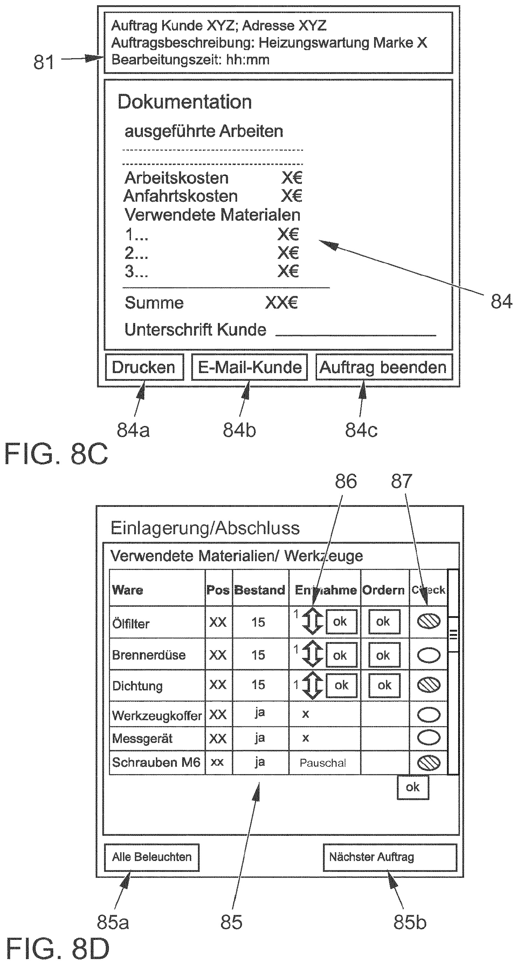

Der Nutzer kann ferner eine weitere Schaltfläche 82c betätigen, welche die Erstellung einer Abrechnung auslöst. Die dazugehörige Anzeige wird weiter unten mit Bezug zu Figur 8C näher erläutert.

Die Anzeige in Figur 8B dient dem Hinzufügen von Teilen aus einer Inventarliste 83 und ist im Wesentlichen analog zu der Anzeige der Figur 7B gebildet. Hinzugefügte Teile erscheinen bei der Rückkehr zur Anzeige der Figur 8A in der Materialliste 82.

Nachdem die Dokumentation der verwendeten Teile und Rechnungsparameter abgeschlossen ist, erscheint nach dem Betätigen der Schaltfläche 82c die in Figur 8C gezeigte Anzeige einer automatisch erstellten Abrechnung. Die Anzeige umfasst die Daten der Abrechnung 84 sowie eine Schaltfläche 84a, bei deren Betätigung die Abrechnung ausgedruckt wird, eine weitere Schaltfläche 84b, bei deren Betätigung die Abrechnung an die E-Mail-Adresse des Kunden geschickt wird, sowie eine weitere Schaltfläche 84c, bei deren Betätigung der Abschluss des Auftrags registriert und die Anzeige der Figur 8D erzeugt wird.

Die Anzeige in Figur 8D umfasst eine Liste 85, die analog zu der Materialliste 82 der Figur 8A aufgebaut ist. Allerdings wird in dieser Liste nicht die Entnahme von Teilen aus den Aufbewahrungsvorrichtungen 17.1 bis 17.6 erfasst, sondern die Einlagerung, das heißt die Anzahl der Teile, die in die Aufbewahrungsvorrichtungen 17.1 bis 17.6 eingebracht werden. Insbesondere wird erfasst, welche Werkzeuge wieder in den Ladebereich 11b des Fahrzeugs 11 eingeladen werden. Diese Erfassung kann beispielsweise über einen Stromfluss erfolgen, der gemessen wird, wenn ein elektrisches Gerät zur Aufladung eines Akkus an das Bordnetz angeschlossen wird.

Analog zu dem oben erläuterten "Safety-Check" werden die Leuchtflächen 87 der Liste 85 so ausgebildet, dass der Status der Betätigung der Aufbewahrungsvorrichtungen 17.1 bis 17.6 überprüft werden kann. Zum Beispiel können Leuchtflächen 87 in einer bestimmten Farbe dargestellt werden, wenn ein entnommenes Werkzeug nicht zurückgeführt wurde oder wenn eine Aufbewahrungsvorrichtung 17.1 bis 17.6 nicht ordnungsgemäß geschlossen wurde. Beispielsweise werden nicht geschlossene Schubladen, Fächer oder Sicherungseinrichtungen auf diese Weise angezeigt. Andererseits werden die Aufbewahrungsvorrichtungen 17.1 bis 17.6, die bei der Durchführung des Auftrags betätigt wurden, in einer anderen Farbe der Leuchtfläche 87 markiert, wenn sie ordnungsgemäß geschlossen beziehungsweise wenn ein entnommenes Werkzeug wieder eingelagert wurde. Die Leuchtfläche 87 kann beispielsweise rot oder grün dargestellt werden.

Bei dem Ausführungsbeispiel ist ferner vorgesehen, dass die als nicht ordnungsgemäß geschlossen oder nicht vorhanden markierten Aufbewahrungsvorrichtungen 17.1 bis 17.6 auch anhand der Beleuchtungseinrichtungen 18.1 bis 18.6 markiert werden.

Die Anzeige umfasst ferner eine Schaltfläche 85a, bei deren Betätigung alle zuvor bei den Arbeiten betätigten Aufbewahrungsvorrichtungen 17.1 bis 17.6 beleuchtet werden, sowie eine weitere Schaltfläche 85b, bei deren Betätigung der nächste Auftrag begonnen wird.

Beim Beginn der Durchführung eines neuen Auftrags wird insbesondere eine neue Liste angelegt, in der die betätigten Aufbewahrungsvorrichtungen 17.1 bis 17.6 gespeichert werden, um anschließend die entnommenen Teile registrieren zu können.

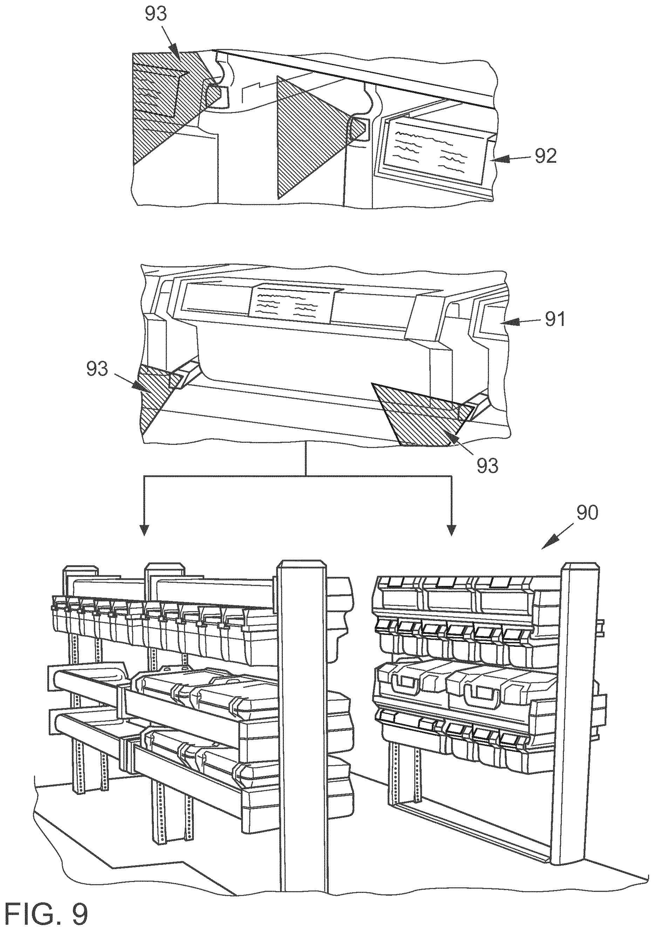

Mit Bezug zu Figur 9 wird ein Ausführungsbeispiel eines Regalsystems mit Aufbewahrungsvorrichtungen erläutert.

Das Regalsystem 90 ist auf an sich bekannte Weise so gebildet, dass es im Ladebereich 11b des Fahrzeugs 11 eingebaut werden kann und Platz für Aufbewahrungsvorrichtungen 91, 92, bei dem Ausführungsbeispiel Boxen 91 und Schubladen 92, bietet. Alternativ oder zusätzlich können andere Aufbewahrungsvorrichtungen 91, 92 vorgesehen sein. Die Aufbewahrungsvorrichtungen 91, 92 sind dabei so gebildet, dass sie Materialien, Ersatzteile, Werkzeuge und andere Objekte so aufnehmen, dass diese im Fahrzeug 11 sicher gelagert sind. Insbesondere wird ein Herabfallen während der Fahrt des Fahrzeugs 11 vermieden.

Bei dem Regalsystem 90 ist für jede Aufbewahrungsvorrichtung 91, 92 ein bestimmter Platz vorgesehen, beispielsweise einen Stellplatz für eine Box 91 oder eine Aufhängung für eine Schublade 92. An diesen Plätzen sind jeweils Beleuchtungseinheiten 93, bei dem Ausführungsbeispiel eine LED, angeordnet und separat ansteuerbar.

An den Plätzen sind ferner Sensoren angebracht, die eine Belegung mit einer Aufbewahrungsvorrichtung 91, 92 detektieren, beispielsweise mittels eines Kontaktschalters, durch Messung eines Gewichts, durch einen optischen Sensor oder einen elektromagnetischen Sensor. Die Sensoren erfassen ferner einen Betätigungszustand der Aufbewahrungsvorrichtungen 91, 92, das heißt insbesondere ein Öffnen einer Schublade 92 oder ein Herausnehmen einer Box 91. Bei anderen Ausführungsbeispielen können separate Sensoren zur Erfassung der Betätigung verwendet werden oder die Aufbewahrungsvorrichtungen 91, 92 können selbst Sensoren für die Betätigung umfassen.

Bei weiteren Ausführungsbeispielen weisen die Aufbewahrungsvorrichtungen 91, 92 jeweils eine Kennung auf, die von den Sensoren erfasst werden kann und es erlaubt, die jeweilige Aufbewahrungsvorrichtung 91, 92 und/oder ihren Inhalt zu erfassen. Bei weiteren Ausführungsbeispielen können ferner Sensoren vorgesehen sein, durch die der Inhalt einer Aufbewahrungsvorrichtung 91, 2 90 automatisch erfasst wird, beispielsweise anhand des Gewichts, durch einen optischen Sensor oder durch eine elektromagnetische Detektion, insbesondere mittels Nahfeldkommunikation (RFID).

Zur Ansteuerung der LEDs 93 sowie zum Auslesen der von den Sensoren erfassten Informationen über die Belegung und/oder den Betätigungszustand der Aufbewahrungsvorrichtungen 91, 92 ist das Regalsystem 90 mit dem Funktionssteuergerät 17 des Fahrzeugs 11 gekoppelt, wobei insbesondere eine oder mehrere Schnittstellen des Funktionssteuergerät 17 genutzt werden.

Das Regalsystem kann ferner eine Arbeitsbeleuchtung umfassen, die angesteuert werden kann und bei deren Aktivierung eine Lichtemission einen Arbeitsbereich beleuchtet. Die Arbeitsbeleuchtung kann zusätzlich zu einer Innenraumbeleuchtung des Fahrzeugs 11 vorgesehen oder in diese integriert sein.

Das Regalsystem umfasst bei dem Ausführungsbeispiel Stromanschlüsse, die durch das Fahrzeugnetz mit elektrischer Spannung versorgt werden. Zudem ist ein Anschluss an ein externes Energieversorgungsnetz vorgesehen, beispielsweise mittels Drehstrom auf einer Baustelle.

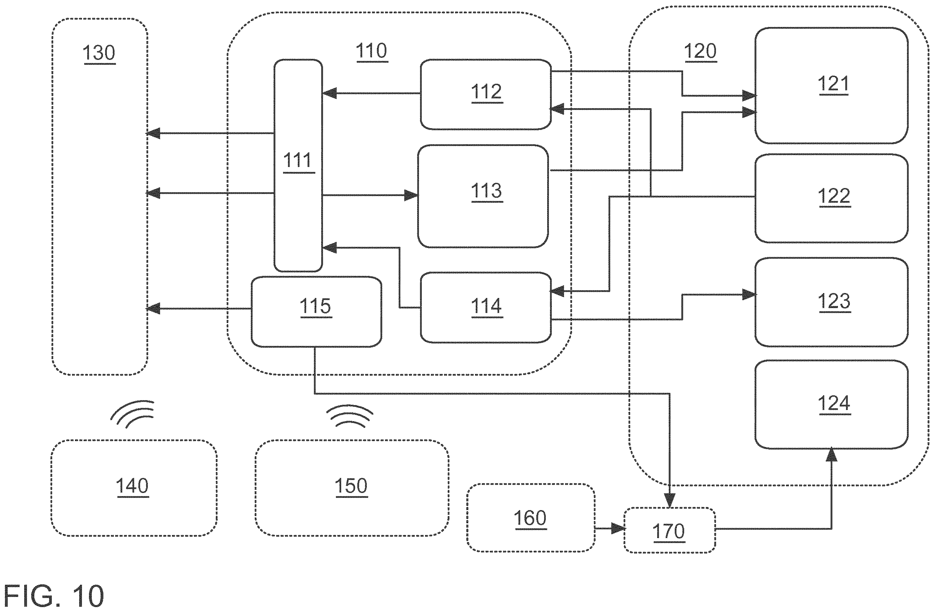

Mit Bezug zu Figur 10 wird ein weiteres Beispiel der Komponenten eines Auftrags- und Materialverwaltungssystems in einem Fahrzeug erläutert.

Das System umfasst ein Funktionssteuergerät 110, welches wiederum die folgenden Module umfasst: Eine App-Schnittstelle 111; ein Safety-Check-Modul 112 zum Prüfen, ob Werkzeuge und Aufbewahrungsvorrichtungen an ihrem ordnungsgemäßen Platz sind; eine Regalplatz-Markierung 113 zum Markieren relevanter Aufbewahrungsvorrichtungen und/oder relevanter Plätze eines Regalsystems 120; eine Füllstatus-Abfrage 114, beispielsweise mit einem Ringzähler, zur Bestimmung eines Füllstatus von Aufbewahrungsvorrichtungen für bestimmte Teile; und ein Modul zur Bereitstellung von Strom und zur Ansteuerung von Steckdosen 115 oder einem Arbeitslicht.

Das System umfasst ferner ein Regalsystem 120 mit den folgenden Modulen: Status-LEDs 121 an individuellen Regalplätzen, die LEDs für rotes und grünes Licht umfassen; Endlagesensoren 122, die als Reedschalter oder Hallsensoren ausgebildet sind; eine Füllstatus-LED-Leiste, bei dem Ausführungsbeispiel mit mehreren weißen LEDs, die beispielsweise an Plätzen für entnehmbare Boxen oder andere Aufbewahrungsvorrichtungen vorgesehen sind, um deren Füllstatus anzuzeigen; sowie elektrische Verbraucher 124, insbesondere angeschlossen an Steckdosen mit 230 V Spannung.

Das System umfasst ferner: Einen Power-PC 130; zumindest einen Tablet-Computer 140, der dem Personenbereich 11a und/oder dem Ladebereich 11b des Fahrzeugs 11 zugeordnet ist; ein Smartphone 150 zur Bereitstellung einer App-Oberfläche und/oder einer WLAN-Schnittstelle, wobei anhand des WLAN-Signals zum Beispiel eine Annäherungserkennung durchgeführt werden kann; einen Spannungswandler 160; und ein Relais 170. Ggf. kann der Power PC 130 jedoch auch entfallen und seine Funktionen bzw. Aufgaben werden von dem Funktionssteuergerät 110 übernommen.

Die App-Schnittstelle 111 des Funktionssteuergeräts 110 empfängt Statusrückmeldungen von dem Safety-Check-Modul 112 sowie von dem Modul zur Füllstatus-Abfrage 114. Sie stellt Ausgänge für eine Werkzeug- oder Materialauswahl für das Modul zur Regalplatz-Markierung 113 bereit. Sie ist ferner mit dem Power-PC 130 gekoppelt und überträgt an diesen Steuersignale zur Ansteuerung einer Tür und/oder eines Lichts, insbesondere einer Beleuchtung des Fahrzeugs 11.

Das Safety-Check-Modul 112 überträgt Statusrückmeldungen an die App-Schnittstelle 111 sowie Steuersignale an die Status-LEDs 121 des Regalsystems 120. Hierdurch können relevante Aufbewahrungsvorrichtungen markiert werden, beispielsweise wenn sie nicht ordnungsgemäß verschlossen sind oder wenn Aufbewahrungsvorrichtungen nicht an ihren Platz sind. Hierzu leuchten die Status-LEDs 121 rot oder grün auf. Analog dazu werden von dem Modul zur Regalplatz-Markierung 113 Steuersignale an die Status-LEDs 121 übertragen, in diesem Fall jedoch nicht zur Überprüfung der ordnungsgemäßen Belegung, sondern um den Nutzer bei der Entnahme oder Einlagerung von Teilen in die Aufbewahrungsvorrichtungen zu unterstützen.

Die Endlagesensoren 122 des Regalsystems 120 registrieren anhand von Lageveränderungen der Aufbewahrungsvorrichtungen ihre Betätigung, beispielsweise durch Öffnen von Schubladen, Fächern und Sicherungsvorrichtungen, oder Entnehmen von Boxen, Kisten und Koffern. Informationen über die Betätigung werden an das Modul zur Füllstatus-Abfrage 114 sowie an das Modul für den Safety-Check 112 übertragen. Beispielsweise wird während der Bearbeitung eines Auftrags gespeichert, welche Aufbewahrungsvorrichtungen betätigt werden, um anhand dieser Informationen anschließend die potentiell entnommenen Teile bestimmen zu können. Dies erfolgt insbesondere anhand der Statusrückmeldungen, die von dem Modul für die Füllstatus-Abfrage 114 an die App-Schnittstelle 111 übertragen werden. Das Modul für die Füllstatus-Abfrage 114 überträgt ferner Steuersignale an die Füllstatus-LED-Leiste 123, um Aufbewahrungsvorrichtungen durch weißes Licht zu markieren, die nicht mehr ausreichend befüllt sind oder die im Gegenteil noch ausreichende Füllung aufweisen.

Bei dem Ausführungsbeispiel ist vorgesehen, dass in räumlicher Nähe zu einzelnen Aufbewahrungsvorrichtungen eine Füllstatus-LED-Leiste 123 vorgesehen ist. Diese umfasst in einer Reihe angeordneten LEDs, die insbesondere weißes Licht emittieren oder zwischen weißer und roter Emission umgeschaltet werden können. Wenn eine Betätigung der Aufbewahrungsvorrichtung erfasst wird, zählt eine Ringzähler des Moduls zur Füllstatus-Abfrage 114 eine zusätzliche Entnahme. In Abhängigkeit von der Zahl der Entnahmen sinkt der Füllstatus und weniger LEDs leuchten weiß. Stattdessen können die verbleibenden LEDs rot leuchten. Alternativ oder zusätzlich kann die tatsächliche Entnahme aus der Aufbewahrungsvorrichtung gemessen werden, um die Zahl der weiß leuchtenden LEDs anhand des tatsächlichen Füllstatus zu steuern. Andere Anzeigen können analog dazu verwendet werden.

Zudem ist eine CAN-Schnittstelle vorgesehen zum Datenaustausch zwischen dem Funktionssteuergerät 110 und dem Power-PC 130. Die über die CAN-Schnittstelle ausgetauschten Daten betreffen beispielsweise Daten über den Status oder Steuersignale von dem Tablet-Computer 140.

Der Tablet-Computer 140 ist über WLAN mit dem Power-PC 130 gekoppelt. Über eine App-Oberfläche können Informationen über den Zustand des Systems ausgegeben oder Nutzereingaben zur Ansteuerung von Systemkomponenten erfasst werden.

Das Smartphone 150 ist bei dem Ausführungsbeispiel per WLAN mit dem Funktionssteuergerät 110 gekoppelt. Es stellt eine App-Oberfläche bereit, durch die Informationen über den Zustand des Systems ausgegeben oder Nutzereingaben zur Ansteuerung von Systemkomponenten erfasst werden. Zudem ist vorgesehen, dass ein Nutzer das Smartphone 150 stets mit sich führt, sodass anhand der Annäherung des Smartphones 150 in das Fahrzeug 11 auch die Ernährung des Nutzers oder seine Position im Bereich des Fahrzeugs 11 bestimmt werden kann.

Analog zu dem in Figur 1B gezeigten Ausführungsbeispiel können auch das erste 16 und das zweite Nutzergerät 19 mittels des Tablet-Computers 140 und des Smartphones 150 implementiert werden und dem Personenbereich 11a beziehungsweise dem Ladebereich 11b des Fahrzeugs 11 zugeordnet sein.

Der Spannungswandler 160 und das Modul zur Bereitstellung von Strom und zur Ansteuerung von Steckdosen 115 oder einem Arbeitslicht sind mit dem Relais 170 gekoppelt, das wiederum die elektrischen Verbraucher 124 des Regalsystems 120 ansteuert. Bei dem Ausführungsbeispiel wird dadurch bestimmt, an welchen Steckdosen Strom bereitgestellt wird, ferner kann der entnommene Strom gemessen und wie entnommenes Material bei der Erstellung einer Abrechnung berücksichtigt werden.

Das Funktionssteuergerät 110 weist Schnittstellen zu dem Regalsystem 120 und den Nutzergeräten 140, 150 auf. Es ist ferner über CAN-Schnittstellen mit Einrichtungen des Fahrzeugs 11 gekoppelt. Dies erlaubt die Koordinierung und Steuerung des Regalsystems 120 sowie von Einrichtungen des Fahrzeugs über den Power-PC 130 bzw. das Funktionssteuergerät 110.

Beispielsweise kann bestimmt werden, ob sich ein Nutzer mit dem Smartphone 150 in der Nähe des Fahrzeugs aufhält oder von diesem entfernt. Entnimmt der Nutzer beispielsweise eine schwere Kiste aus dem Fahrzeug, so kann er die Einrichtungen des Fahrzeugs nur schwer manuell bedienen. Bei dem Ausführungsbeispiel wird detektiert, dass sich der Nutzer von dem Fahrzeug 11 entfernt und es wird ein Schließen der Tür sowie ein großer Ausschalten der Beleuchtung des Fahrzeugs 11 veranlasst. Umgekehrt wird die Tür geöffnet und die Beleuchtung angeschaltet, wenn sich der Nutzer dem Fahrzeug 11 wieder nähert, sodass er auch hier mit schwerem Gepäck keine zusätzliche Schwierigkeiten bei der Bedienung des Fahrzeugs 11 hat.

**Bezugszeichenliste**

| | | | |
|---|---|---|---|
| 11,12, 13, 14 | Fahrzeug | 34 | Aktuell durchgeführter Auftrag (Informationsfeld) |
| 11a | Personen bereich | | |
| 11b | Ladebereich | 34a | Auftragsbezeichnung |
| 15 | Zentrale Steuereinheit | 34b | Geschätzte Dauer (Anzeige) |
| 16 | Erstes Nutzergerät | 34c | Schaltfläche "Anruf starten" |
| 17 | Funktionssteuergerät | 35 | Folgender Auftrag |
| 17.1, 17.2, 17.3, 17.4, 17.5, 17.6 | Aufbewahrungsvorrichtung, Schublade, Fach | 36 | Warnsymbol |
| | | 401 | Materialliste |
| | | 402 | Prüfleuchte "Box vorhanden" |
| 18.1, 18.2, 18.3, 18.4, 18.5, 18.6 | Beleuchtungseinheit | 403 | Schaltfläche "Auftrag starten" |
| 19 | Zweites Nutzergerät | 404 | Schaltfläche "Alle beleuchten" |
| 20 | Senden von Auftragsdaten | 405 | Schaltfläche "Teile hinzufügen" |
| 21 | Empfang der Auftragsdaten | 406 | Suchfeld |
| 22 | Abrufen von Fahrzeug-Statusdaten | 407 | Schaltfläche "Beschaffen" |
| 23 | Schnittstelle zu Fahrzeugflotte | 408 | Schaltfläche "Abbrechen" |
| 24a, 24b, 24c | Bereitstellen der Fahrzeug-Statusdaten | 409 | Ergebnisliste |
| | | 410 | Schaltfläche "Hinzufügen" |
| 25 | Ermittlung geeignetes Fahrzeug | 411 | Schaltfläche "Abbrechen" |
| 26 | Erzeugen Durchführungsdaten | 412 | Liste Beschaffungsmöglichkeiten |
| 27 | Senden Durchführungsdaten | 413 | Haken |
| 28 | Empfangen Durchführungsdaten | 414 | Summe |
| 31 | Kartenausschnitt | 415 | Bestellungsbestätigung |
| 32 | Auftragsorte, Zwischenziele | 416 | Markierung |
| 33 | Route | 501 | Materialliste |
| 33a | Aktuelle Position | 502 | Prüfleuchte "Box vorhanden" |
| 503 | Sicherheitsleuchte "Schublade geöffnet" | 69 | Schaltfläche "Alle Quittierungen zurücksetzen" |
| 504 | Schaltfläche "Alle beleuchten" | 71 | Informationsfeld |
| 505 | Schaltfläche "Teile hinzufügen" | 72 | Materialliste |
| 506 | Suchfeld | 72a | Scrollbalken |
| 508 | Schaltfläche "Abrechnen" | 72b | Schaltfläche |
| 509 | Ergebnisliste | 73 | Liste Beschaffungsmöglichkeiten |
| 511 | Schaltfläche "Abbrechen" | 73a | Scrollbalken |
| 513 | Haken | 74 | Inventarliste |
| 514 | Markierung | 74a | Scrollbalken |
| 515 | Abschlussbestätigung | 75 | Schaltfläche "Teile hinzufügen" |
| 516 | Abrechnung | 76 | Schaltfläche "Beschaffung einplanen" |
| 517 | Schaltfläche "Schließen" | | |
| 518 | Schaltfläche "Nächster Auftrag" | 77 | Schaltfläche "Kunden kontaktieren" |
| 536 | Warnsymbol | 78 | Schaltfläche "Zurück" |
| 60 | Schaltfläche "Zurück" | 79 | Suchfeld |
| 61 | Kartenausschnitt | 71 | Informationsfeld |
| 62 | Auftragsort | 72 | Materialliste |
| 63 | Beschaffungsort | 72a | Scrollbalken |
| 64 | Schaltfläche "Auftrag löschen" | 72b | Schaltfläche "Anzahl" |
| 65 | Schaltfläche "Safety-Check" | 73 | Liste Beschaffungsmöglichkeiten |
| 65a | Leuchtfläche | 73a | Scrollbalken |
| 66 | Schaltfläche "Kunden kontaktieren" | 74 | Inventarliste |
| 67 | Schaltfläche "Auftrag bearbeiten" | 74a | Scrollbalken |
| 68 | Tabelle "Offene Boxen" | 75 | Schaltfläche "Teile hinzufügen" |
| 68a | Schaltfläche "Quittieren" | 76 | Schaltfläche "Beschaffung einplanen" |
| 68b | Leuchtfläche | 77 | Schaltfläche "Kunden kontaktieren" |
| 78 | Schaltfläche "Zurück" | 114 | Füllstatus-Abfrage |
| 79 | Suchfeld | 115 | Steckdosen; Arbeitslicht |
| 81 | Informationsfeld | 120 | Regalsystem |
| 82 | Materialliste | 121 | Status-LEDs |
| 82a | Schaltfläche "Alles beleuchten" | 122 | Endlagesensoren |
| 82b | Schaltfläche "Hinzufügen" | 123 | Füllstatus-LED-Leiste |
| 82c | Schaltfläche "Abrechnung" | 124 | elektrische Verbraucher |
| 83 | Inventarliste | 130 | Power-PC |
| 83a | Suchfeld | 140 | Tablet-Computer |
| 84 | Abrechnung | 150 | Smartphone |
| 84a | Schaltfläche "Drucken" | 160 | Spannungswandler |
| 84b | Schaltfläche "E-Mail-Kunde" | 170 | Relais |
| 84c | Schaltfläche "Auftrag beendet" | | |
| 85 | Liste "Einlagerung Material ien/Werkzeuge" | | |
| 85a | Schaltfläche "Alles beleuchten" | | |
| 85b | Schaltfläche "Nächster Auftrag" | | |
| 86 | Schaltfläche "Anzahl" | | |
| 87 | Leuchtfläche | | |
| 90 | Regalsystem | | |
| 91 | Aufbewahrungsvorrichtung; Box | | |
| 92 | Aufbewahrungsvorrichtung; Schublade | | |
| 93 | Beleuchtungseinheit; LED | | |
| 110 | Funktionssteuergerät | | |
| 111 | App-Schnittstelle | | |
| 112 | Safety-Check | | |
| 113 | Regalplatz-Markierung | | |

## Patentansprüche

1. Verfahren zum Betreiben eines Materialbestands-Verwaltungssystems in einem Fahrzeug (11) mit zumindest zwei Aufbewahrungsvorrichtungen (17.1 bis 17.6); bei dem
Durchführungsdaten empfangen werden, wobei die Durchführungsdaten einen Materialbedarf umfassen,
eine Materialbestands-Liste bereitgestellt wird, durch die den Aufbewahrungsvorrichtungen (17.1 bis 17.6) jeweils zumindest eine Inhaltsinformation zugeordnet wird;
anhand der Materialbestands-Liste und des Materialbedarfs relevante Aufbewahrungsvorrichtungen (17.1 bis 17.6) bestimmt werden und
die relevanten Aufbewahrungsvorrichtungen (17.1 bis 17.6) hervorgehoben werden.

2. Verfahren gemäß Anspruch 1,
**dadurch gekennzeichnet, dass**
ein Beginn einer Auftragsdurchführung erfasst wird; und
während der Auftragsdurchführung Betätigungen der Aufbewahrungsvorrichtungen (17.1 bis 17.6) erfasst werden.

3. Verfahren gemäß Anspruch 2,
**dadurch gekennzeichnet, dass**
nach einem Abschluss der Auftragsdurchführung die betätigten Aufbewahrungsvorrichtungen (17.1 bis 17.6) hervorgehoben werden.

4. Verfahren gemäß Anspruch 2 oder 3,
**dadurch gekennzeichnet, dass**
der Beginn der Auftragsdurchführung anhand einer Nutzereingabe oder anhand einer Aktivität im Bereich eines Ladebereichs (11b) des Fahrzeugs (11) erfasst wird.

5. Verfahren gemäß einem der vorhergehenden Ansprüche,
**dadurch gekennzeichnet, dass**
die relevanten Aufbewahrungsvorrichtungen (17.1 bis 17.6) mittels eines Lichtsignals hervorgehoben werden.

6. Verfahren gemäß Anspruch 5,
**dadurch gekennzeichnet, dass**
das Lichtsignal mittels Leuchtmitteln (18.1 bis 18.6) erzeugt wird, die in der Umgebung der jeweiligen Positionen der Aufbewahrungsvorrichtungen (17.1 bis 17.6) angeordnet sind.

7. Verfahren gemäß einem der vorhergehenden Ansprüche,
**dadurch gekennzeichnet, dass**
für jede der Aufbewahrungsvorrichtungen (17.1 bis 17.6) jeweils ein Betätigungszustand erfasst wird; und,
wenn ein geöffneter Betätigungszustand erfasst wird, die jeweilige Aufbewahrungsvorrichtung (17.1 bis 17.6) hervorgehoben wird.

8. Verfahren gemäß Anspruch 7,
**dadurch gekennzeichnet, dass**
ferner eine Aufbewahrungsvorrichtung (17.1 bis 17.6) hervorgehoben wird, die zur Aufnahme eines Werkzeugs vorgesehen ist, wenn das Werkzeug nicht in der Aufbewahrungsvorrichtung (17.1 bis 17.6) detektiert wird.

9. Verfahren gemäß einem der vorhergehenden Ansprüche,
**dadurch gekennzeichnet, dass**
eine leere Aufbewahrungsvorrichtung (17.1 bis 17.6) erfasst und hervorgehoben wird.

10. Materialbestands-Verwaltungssystem in einem Fahrzeug (11) mit zumindest zwei Aufbewahrungsvorrichtungen (17.1 bis 17.6); das Materialbestands-Verwaltungssystem umfassend
eine Empfangseinheit, die dazu eingerichtet ist, Durchführungsdaten zu empfangen, wobei die Durchführungsdaten einen Materialbedarf umfassen,
eine Speichereinheit, die dazu eingerichtet ist, eine Materialbestands-Liste bereitzustellen, durch die den Aufbewahrungsvorrichtungen (17.1 bis 17.6) jeweils zumindest eine Inhaltsinformation zugeordnet wird; und
eine Recheneinheit, die dazu eingerichtet ist, anhand der Materialbestands-Liste und der Materialliste relevante Aufbewahrungsvorrichtungen (17.1 bis 17.6) zu bestimmen, wobei
das Materialbestands-Verwaltungssystem dazu eingerichtet ist, die relevanten Aufbewahrungsvorrichtungen (17.1 bis 17.6) hervorzuheben.
